# EUROPÄISCHE PATENTSCHRIFT

(11) **EP 4 289 543 B1**
(45) Veröffentlichungstag und Bekanntmachung des Hinweises auf die Patenterteilung: **29.01.2025**
(21) Anmeldenummer: 23169512.3
(22) Anmeldetag: 24.04.2023
(51) Int. Cl.: B23K 11/11, B23K 11/25

(54) **VORRICHTUNG ZUR MESSUNG DER SCHWEISSKRAFT UND ZUR ERFASSUNG DER ELEKTRISCHEN SCHWEISSSPANNUNG WÄHREND EINES SCHWEISSVORGANGS EINER WIDERSTANDSCHWEISSEINRICHTUNG**
DEVICE FOR MEASURING THE WELDING FORCE AND FOR DETECTING THE ELECTRIC WELDING VOLTAGE DURING A WELDING PROCESS OF A RESISTANCE WELDING DEVICE
DISPOSITIF DE MESURE DE LA FORCE DE SOUDAGE ET DE DÉTECTION DE LA TENSION DE SOUDAGE ÉLECTRIQUE PENDANT LE SOUDAGE D'UN DISPOSITIF DE SOUDAGE PAR RÉSISTANCE

(30) Priorität: 08.06.2022 EP 22150765
(43) Veröffentlichungstag der Anmeldung: 13.12.2023
(73) Patentinhaber: Kistler Holding AG, 8408 Winterthur (CH)
(72) Erfinder: Lehmann, Andri, 8212 Neuhausen am Rheinfall (CH); Naegeli, Davorin, 8115 Hüttikon (CH); Koch, Stefan, 8442 Hettlingen (CH)

(56) Entgegenhaltungen:
- KR-A- 20160 065 331
- KR-A- 20180 110 731
- US-A1- 2018 236 591

## Beschreibung

### Technisches Gebiet

Die Erfindung betrifft eine Vorrichtung zur Messung der Schweisskraft und zur Erfassung der elektrischen Schweissspannung während eines Schweissvorgangs einer Widerstandschweisseinrichtung nach dem Oberbegriff des unabhängigen Anspruchs.

### Stand der Technik

Mit Widerstandsschweisseinrichtungen lassen sich metallische Werkstücke wie Bleche, usw. verschweissen. Solche Widerstandsschweisseinrichtungen finden in Schweissrobotern Anwendung und werden in der metallbearbeitenden Industrie vielfältig eingesetzt. Üblicherweise weist eine Widerstandsschweisseinrichtung eine Schweisszange mit zwei Elektrodenarmen auf. Zumindest einer der Elektrodenarme ist beweglich ausgeführt, einer der Elektrodenarme kann ortsfest sein. Durch Verfahren des beweglichen Elektrodenarms lässt sich die Schweisszange öffnen und schliessen. Bei geöffneter Schweisszange werden Werkstücke zwischen den Elektrodenarmen positioniert, bei geschlossener Schweisszange werden die Werkstücke mit einer Schweisskraft von mehreren kN beaufschlagt. Die Grösse der Schweisskraft, die Grösse des elektrischen Schweissstroms und die Grösse der elektrischen Schweissspannung während des Schweissvorgangs sind vordefiniert. Üblicherweise wird der Schweissvorgang erst gestartet, sobald die Werkstücke mit einer Mindestschweisskraft von 90% der Schweisskraft beaufschlagt sind. Während des Schweissvorgangs werden die Werkstücke dann durch einen elektrischen Schweissstrom von mehreren 10kA bei einer elektrischen Schweissspannung von einigen V verschweisst.

Für eine gleichbleibend hohe Qualität des Schweissvorgangs, misst eine Vorrichtung die während des Schweissvorgangs wirkende Schweisskraft und sie erfasst die während des Schweissvorgangs anliegende elektrische Schweissspannung. Diese Messung und Erfassung werden regelmässig dokumentiert. Auch lässt sich mit dieser Messung und Erfassung ein Wartungsbedarf der Schweisszange ermitteln.

Solch eine Vorrichtung zur Messung der Schweisskraft und zur Erfassung der elektrischen Schweissspannung während des Schweissvorgangs einer Widerstandschweisseinrichtung wird von der Anmelderin als Schweisskraft-Kalibriertransmitter Typ 9831C kommerziell vertrieben und ist in der Betriebsanleitung 9831C_002.567d-04.11 beschrieben. Die Vorrichtung weist einen Handgriff mit zwei Kontaktbuchsen auf. Mit dem Handgriff wird die Vorrichtung von einem menschlichen Operator gehalten und über die Kontaktbuchsen wird die Vorrichtung an Stelle der Werkstücke zwischen den Elektrodenarmen zentriert platziert.

Die Vorrichtung weist ein piezoelektrisches Sensorelement auf, welches unter der Wirkung der Schweisskraft elektrische Polarisationsladungen erzeugt. Die Anzahl der elektrischen Polarisationsladungen ist proportional zur Grösse der Schweisskraft. Über die elektrischen Polarisationsladungen wird die Schweisskraft gemessen. Die Vorrichtung weist eine Ladungsverstärkereinheit auf, welche die elektrischen Polarisationsladungen in elektrische Gleichspannungen verstärkt.

Die Vorrichtung weist ein Bauelement auf, welches die zwischen den Elektrodenarmen anliegende elektrische Schweissspannung erfasst.

Die Schrift KR20180110731A1 zeigt eine Widerstandsschweisseinrichtung mit einer Schweisszange und zwei Elektrodenarmen. Eine Vorrichtung zur Messung der Schweisskraft weist eine untere und eine obere Kontaktbuchse auf. Über die untere Kontaktbuchse ist die Vorrichtung an einem unteren der beiden Elektrodenarme platzierbar. Die Vorrichtung misst die Schweisskraft mit einer Kraftmesszelle.

Die Schrift KR20160065331A1 zeigt eine Widerstandsschweisseinrichtung mit einer Schweisszange und zwei Elektrodenarmen. Eine Vorrichtung zur Messung der Schweisskraft und zur Erfassung der Schweissspannung ist an den Elektrodenarmen platzierbar. Dazu weist die Vorrichtung zwei Kontaktbuchsen auf und jede Kontaktbuchse ist mit einer konischen Vertiefung versehen. Jede der Kontaktbuchsen nimmt über ihre konische Vertiefung einen der Elektrodenarme auf. Die Vorrichtung misst die Schweisskraft über Dehnungsmessstreifen und sie erfasst die Schweissspannung über einen ringförmigen Stromsensor.

Nun ist es Wunsch der metallbearbeitenden Industrie, solch eine Vorrichtung ohne die physische Präsenz eines Operators zu betreiben. Insbesondere Schweissroboter sollen aus Sicherheitsgründen nicht ohne räumliche Trennung durch eine Schutzeinrichtung mit einem menschlichen Operator zusammenarbeiten.

Dazu bezieht sich die Schrift US2018236591A1 auf eine Widerstandsschweisseinrichtung mit einer Schweisszange und zwei Elektrodenarmen. Sie offenbart eine Vorrichtung mit einer Kraftmesszelle zur Messung der Schweisskraft. Die Vorrichtung lässt sich über ein topfförmiges Halteteil an den beiden Elektrodenarmen temporär fixieren.

Und dann werden beim Halten der Vorrichtung durch den menschlichen Operator während der Messung der Schweisskraft und der Erfassung der elektrischen Schweissspannung während des Schweissvorgangs über den Handgriff Vibrationen und Biegemomente in die Vorrichtung eingebracht, welche Vibrationen und Biegemomente die Messung der Schweisskraft und die Erfassung der elektrischen Schweissspannung während Schweissvorgangs verfälschen können. Abhilfsweise werden die Messungen und Erfassungen daher mehrmals wiederholt, um so statistische Mittelwerte zu erhalten, was den Einfluss der Verfälschung durch Vibrationen und Biegemomente auf die Genauigkeit der Messungen und Erfassungen reduziert. Doch ist die mehrmalige Wiederholung der Messung der Schweisskraft und der Erfassung der elektrischen Schweissspannung während des Schweissvorgangs zeitaufwändig und somit teuer.

Es ist daher Aufgabe der vorliegenden Erfindung, eine Vorrichtung zur Messung der Schweisskraft und zur Erfassung der elektrischen Schweissspannung während eines Schweissvorgangs einer Widerstandschweisseinrichtung aufzuzeigen, welche autonom, ohne die Präsenz eines menschlichen Operators betrieben werden kann, welche die Schweisskraft und die Erfassung der elektrischen Schweissspannung während des Schweissvorgangs mit hoher Genauigkeit ermöglicht, und welche die Messung der Schweisskraft und die Erfassung der elektrischen Schweissspannung während des Schweissvorgangs einfach, rasch und günstig durchführt.

### Darstellung der Erfindung

Diese Aufgabe wird durch die Merkmale des unabhängigen Anspruchs gelöst.

Die Erfindung betrifft eine Vorrichtung zur Messung der Schweisskraft und zur Erfassung der elektrischen Schweissspannung während eines Schweissvorgangs einer Widerstandschweisseinrichtung welche Widerstandschweisseinrichtung eine Schweisszange mit zwei Elektrodenarmen aufweist; mit zwei Kontaktbuchsen zum Platzieren der Vorrichtung an den Elektrodenarmen; mit mindestens einem Sensorelement zur Messung der Schweisskraft, welche von den Elektrodenarmen während eines Schweissvorgangs ausgeübt wird; und mit mindestens einem Bauelement zur Erfassung der elektrischen Schweissspannung während des Schweissvorgangs; wobei die Vorrichtung ein Kupplungsmittel aufweist, welches Kupplungsmittel, im an den Elektrodenarmen platzierten Zustand der Vorrichtung, die Vorrichtung mechanisch mit der Widerstandschweisseinrichtung kuppelt.

Dadurch, dass das erfindungsgemässe Kupplungsmittel mechanisch mit der Widerstandschweisseinrichtung kuppelt, ist es nicht mehr nötig, die Vorrichtung zur Messung der Schweisskraft und zur Erfassung der elektrischen Schweissspannung während Schweissvorgangs durch einen menschlichen Operator zu halten. Eine solche mechanische Kupplung ist einfach und rasch durchführbar und ermöglicht einen autonomen Betrieb der Vorrichtung. Durch den Wegfall des Haltens durch den menschlichen Operator werden auch keine Vibrationen und Biegemomente in die Vorrichtung eingebracht, was die Genauigkeit der Messung der Schweisskraft und die Erfassung der elektrischen Schweissspannung während des Schweissvorgangs erhöht.

Vorteilhafte Ausführungsformen der Erfindung werden in den abhängigen Ansprüchen beansprucht.

Erfindungsgemäß bestehen die zwei Elektrodenarme aus einem unteren Elektrodenarm und einem oberen Elektrodenarm; wobei die zwei Kontaktbuchsen aus einer unteren Kontaktbuchse und einer oberen Kontaktbuchse bestehen; wobei die untere Kontaktbuchse eine untere konische Vertiefung aufweist, welche untere konische Vertiefung im an den Elektrodenarmen platzierten Zustand der Vorrichtung eine vorderste Spitze des unteren Elektrodenarms aufnimmt und bezüglich einer Vertikalachse zentriert; und wobei zur mechanischen Kupplung von Vorrichtung und Widerstandschweisseinrichtung, das Kupplungsmittel eine Kupplungskraft auf die Widerstandschweisseinrichtung ausübt.

Das Kupplungsmittel übt also zur mechanischen Kupplung von Vorrichtung und Widerstandschweisseinrichtung eine Kupplungskraft auf die Widerstandschweisseinrichtung aus. Das Ausüben einer Kupplungskraft ist einfach und rasch durchzuführen und erlaubt den autonomen Betrieb der Vorrichtung.

In einer vorteilhaften Ausführungsform weist das Kupplungsmittel einen Kupplungskörper auf, welcher Kupplungskörper aussenseitig an der unteren Kontaktbuchse befestigt ist; wobei der Kupplungskörper eine Kupplungsöffnung aufweist, welche Kupplungsöffnung sich entlang der Vertikalachse durch den Kupplungskörper erstreckt und mit der unteren konischen Vertiefung kommuniziert; wobei im an den Elektrodenarmen platzierten Zustand der Vorrichtung der untere Elektrodenarm durch die Kupplungsöffnung ragt; und wobei das Kupplungsmittel zur mechanischen Kupplung von Vorrichtung und Widerstandschweisseinrichtung die Kupplungskraft in der Kupplungsöffnung auf den unteren Elektrodenarm ausübt.

Somit führt die Vorrichtung einfach eine mechanische Kupplung mit dem unteren Elektrodenarm durch, da dieser sowieso nach dem Platzieren der Vorrichtung an den Elektrodenarmen durch eine Kupplungsöffnung des Kupplungsmittels ragt. Auch ist die mechanische Kupplung einfach und rasch durchzuführen und erlaubt den autonomen Betrieb der Vorrichtung.

In einer vorteilhaften Ausführungsform weist das Kupplungsmittel ein Klemmelement auf, welches Klemmelement die Kupplungsöffnung radial umschliesst; wobei das Klemmelement ein erstes Klemmelementende und ein zweites Klemmelementende aufweist, welches erste und zweite Klemmelementende entlang durch einen Spalt voneinander beabstandet sind; und wobei eine Verkleinerung der Breite des Spalts die Kupplungskraft auf den unteren Elektrodenarm ausübt.

Es ist somit ein Klemmelement mit zwei Klemmelementenden, welche durch einen Spalt voneinander beabstandet sind, welches durch Verkleinerung der Breite des Spalts die Kupplungskraft ausübt, was einfach und rasch durchzuführen ist und den autonomen Betrieb der Vorrichtung erlaubt.

In einer vorteilhaften Ausführungsform weist das Kupplungsmittel ein Spannmittel auf, welches Spannmittel am Klemmelement angeordnet ist; wobei das Spannmittel ein Hülsenelement und ein Schraubelement aufweist; wobei das Hülsenelement am ersten Klemmelementende befestigt ist und das Schraubelement hält; und wobei das Schraubelement in das zweite Klemmelementende schraubbar ist und durch das Einschrauben die Breite des Spalts verkleinert.

Ein solches Einschrauben eines Schraubmittels in ein zweites Klemmelementende zur Verkleinerung der Breite des Spalts ist einfach und rasch durchzuführen und erlaubt den autonomen Betrieb der Vorrichtung.

In einer weiteren vorteilhaften Ausführungsform ist in der Kupplungsöffnung ein Halteelement angeordnet; wobei im an den Elektrodenarmen platzierten Zustand der Vorrichtung der untere Elektrodenarm durch die Kupplungsöffnung ragt und das Halteelement staucht; und wobei das gestauchte Halteelement die Kupplungskraft auf den unteren Elektrodenarm ausübt.

Das Anordnen eines stauchbaren Halteelements in der Kupplungsöffnung, welches Halteelement im gestauchten Zustand die Kupplungskraft auf den unteren Elektrodenarm ausübt, ist einfach und rasch durchzuführen und erlaubt den autonomen Betrieb der Vorrichtung.

In einer weiteren vorteilhaften Ausführungsform weist das die Widerstandschweisseinrichtung einen Träger auf; wobei die Vorrichtung im an den Elektrodenarmen platzierten Zustand mechanisch mit dem Träger kuppelbar ist; wobei das Kupplungsmittel aus einem weiteren Befestigungsmittel besteht; und wobei das weitere Befestigungsmittel zur mechanischen Kupplung von Vorrichtung und Widerstandschweisseinrichtung die Kupplungskraft auf den Träger ausübt.

Auch eine solche mechanische Kupplung eines Kupplungsmittels, welches lediglich aus einem weiteren Befestigungsmittel besteht an einem Träger der Widerstandschweisseinrichtung ist einfach und rasch durchführbar und erlaubt den autonomen Betrieb der Vorrichtung.

Erfindungsgemäß weist die Vorrichtung ein Gehäuseunterteil, ein Gehäuseoberteil und einen Isolator auf; wobei die zwei Kontaktbuchsen aus einer unteren Kontaktbuchse und einer oberen Kontaktbuchse bestehen; wobei die untere Kontaktbuchse aussenseitig am Gehäuseunterteil befestigt ist; wobei die obere Kontaktbuchse aussenseitig am Gehäuseoberteil befestigt ist; wobei der Isolator das Gehäuseunterteil elektrisch vom Gehäuseoberteil isoliert; wobei das Gehäuseunterteil und das Gehäuseoberteil über den Isolator mechanisch miteinander verbunden sind; wobei das Gehäuseunterteil, das Gehäuseoberteil und der Isolator im verbundenen Zustand mindestens einen Innenraum umschliessen; und wobei das Sensorelement und das Bauelement im Innenraum angeordnet sind.

Die Vorrichtung weist ein dreiteiliges Gehäuse auf, welches durch ein Gehäuseunterteil, ein Gehäuseoberteil und einen Isolator gebildet wird und welches in einem Innenraum das Sensorelement und die zwei Elektroden aufweist. Die zwei Kontaktbuchsen sind aussenseitig am Gehäuseunterteil und am Gehäuseoberteil befestigt und übermitteln die zu messende Schweisskraft in den Innenraum zum Sensorelement. Ein solches dreiteiliges Gehäuse ist einfach und rasch an den Elektrodenarmen zu platzieren und erlaubt den autonomen Betrieb der Vorrichtung. Dabei isoliert der Isolator das Gehäuseunterteil elektrisch vom Gehäuseoberteil, so dass der elektrische Schweissstrom von mehreren 10kA nicht durch das dreiteilige Gehäuse fliessen und die Messung der Schweisskraft durch das Sensorelement verfälschen kann, was erst eine genaue Messung der Schweisskraft ermöglicht.

In einer weiteren vorteilhaften Ausführungsform ist das Sensorelement im Innenraum im Krafthauptschluss der Schweisskraft angeordnet.

Durch die Anordnung des Sensorelements im Krafthauptschluss wirkt weitgehend die gesamte Schweisskraft auf das Sensorelement, was zu einer hohen Empfindlichkeit des Sensorelements führt. Im Sinne der Erfindung bezeichnet der Begriff "Empfindlichkeit" das Verhältnis der vom Sensorelement unter der Wirkung der Schweisskraft erzeugten Kraftwerte zur Grösse der tatsächlich wirkenden Schweisskraft. Das derart empfindliche Sensorelement weist für die zu messende Schweisskraft eine geringe Ansprechschwelle von kleiner/gleich 0.02N auf, wodurch es auch eine kleine Schweisskraft sehr genau messen kann.

In einer weiteren vorteilhaften Ausführungsform weist die Vorrichtung ein erstes Sensorelement, ein zweites Sensorelement und ein drittes Sensorelement auf; wobei die drei Sensorelemente identische Einkomponenten-Kraftaufnehmer sind, welche die gleiche entlang der Längsachse wirkende Schweisskraft messen; und wobei die drei Sensorelemente für die gemessene Schweisskraft Kraftwerte erzeugen.

Im Vergleich zu Mehrkomponenten-Kraftaufnehmern sind Einkomponenten-Kraftaufnehmer kostengünstig in der Anschaffung. Dadurch, dass die Vorrichtung drei identische Einkomponenten-Kraftaufnehmer aufweist, ist der Messbereich der zu messenden Schweisskraft im Vergleich zu einer Vorrichtung mit nur einem Einkomponenten-Kraftaufnehmer verdreifacht, was die Genauigkeit der Messung der Schweisskraft erhöht.

In einer weiteren vorteilhaften Ausführungsform ist das erste Sensorelement in einem ersten Innenraum angeordnet, das zweite Sensorelement ist in einem zweiten Innenraum angeordnet und das dritte Sensorelement ist in einem dritten Innenraum angeordnet; wobei die drei Sensorelemente in einer Horizontalebene senkrecht zu einer Vertikalachse liegen; wobei die drei Sensorelemente in einer gleichen radialen Distanz zur Vertikalachse angeordnet sind; und wobei die drei Sensorelemente in einem Winkel von 120° gleichmässig beabstandet zueinander angeordnet sind.

Durch diesen symmetrischen Aufbau von drei Sensorelementen in drei Innenräumen bezüglich der Längsachse werden Biegemomente weitgehend vermieden, welche Biegemomente in der Horizontalebene einseitig an der Vorrichtung angreifen und die entlang der Vertikalachse wirkende Schweisskraft verfälschen, was die Genauigkeit der Messung der Schweisskraft erhöht.

In einer weiteren vorteilhaften Ausführungsform ist das Bauelement in einem vierten Innenraum angeordnet; wobei das Bauelement eine untere Elektrode, eine obere Elektrode und einen Optokoppler umfasst; wobei die untere Elektrode innenseitig am Gehäuseunterteil befestigt ist; wobei die obere Elektrode innenseitig am Gehäuseoberteil befestigt ist; und wobei der Optokoppler eine zwischen der unteren Elektrode und der oberen Elektrode anliegende elektrische Schweissspannung erfasst und in Messwerte wandelt.

Das Bauelement weist zwei Elektroden und einen Optokoppler auf, um die während des Schweissvorgangs zwischen dem Gehäuseunterteil und dem Gehäuseoberteil anliegende elektrische Schweissspannung zu erfassen und in Messwerte zu wandeln. Solch ein Optokoppler ist kostengünstig und weist galvanisch voneinander getrennte Ein- und Ausgänge auf. Somit kann die elektrische Schweissspannung von mehreren V nicht in das dreiteilige Gehäuse gelangen und die Messung der Schweisskraft durch das Sensorelement verfälschen, was eine genaue Messung der Schweisskraft ermöglicht.

In einer weiteren vorteilhaften Ausführungsform weist die Vorrichtung eine Auswerteeinheit zur Auswertung der Kraftwerte auf; wobei die Auswerteeinheit in einem fünften Innenraum angeordnet ist; wobei die drei Innenräume der drei Sensorelemente und der Innenraum des Bauelements mit dem fünften Innenraum der Auswerteeinheit über Gänge im Gehäuseunterteil kommunizieren; wobei die drei Sensorelemente elektrische Leitungen aufweisen und die Kraftwerte über die elektrischen Leitungen zur Auswerteeinheit ableiten; wobei der Optokoppler mindestens eine elektrische Leitung aufweist und die Messwerte über die elektrische Leitung zur Auswerteeinheit ableitet; und wobei die elektrischen Leitungen der drei Sensorelemente und die elektrische Leitung des Optokopplers in den Gängen verlegt sind.

Somit sind nicht nur das Sensorelement und das Bauelement, sondern auch die Auswerteeinheit im dreiteiligen Gehäuse angeordnet. Diese räumlich kompakte Anordnung führt zu einer signifikanten Erniedrigung von Gewicht und Baugrösse der Vorrichtung. Dadurch lässt sich die Vorrichtung mit einer vergleichsweise geringen Kupplungskraft mechanisch stabil mit der Schweisszange kuppeln, was einfach und rasch durchführbar ist und den autonomen Betrieb der Vorrichtung erlaubt. Auch wird die gemessene Schweisskraft bereits in der Vorrichtung ausgewertet, wodurch vermieden wird, dass die vom Sensorelement für die gemessene Schweisskraft erzeugten Kraftwerte durch eine Umgebung ausserhalb der Vorrichtung zu einer räumlich entfernten Auswerteeinheit abgeleitet werden müssen, auf welchem Weg zur räumlich entfernten Auswerteeinheit die Kraftwerte durch schädliche Umwelteinflüsse verfälscht werden können, was die Genauigkeit der Messung der Schweisskraft erhöht.

In einer weiteren vorteilhaften Ausführungsform weist die Vorrichtung eine Auswerteeinheit zur Auswertung der gemessenen Schweisskraft auf; wobei das Sensorelement piezoelektrisches Material aufweist, welches unter der Wirkung der Schweisskraft elektrische Polarisationsladungen erzeugt; wobei das Sensorelement die elektrischen Polarisationsladungen an die Auswerteeinheit ableitet; wobei die Auswerteeinheit einen Ladungsverstärker aufweist, welcher die elektrischen Polarisationsladungen in elektrische Gleichspannungen verstärkt; und wobei die Auswerteeinheit über Kalibrierdaten des Sensorelements verfügt, mit welchen Kalibrierdaten die Auswerteeinheit die elektrischen Gleichspannungen linearisiert.

Das piezoelektrische Material erzeugt für die zu messende Schweisskraft Kraftwerte in Form von elektrischen Polarisationsladungen. Die Anzahl der elektrischen Polarisationsladungen ist proportional zur Grösse der wirkenden Schweisskraft. Doch durch äussere Einflüsse wie Schwankungen und Änderungen der Umgebungstemperatur können in den Kraftwerten Messfehler auftreten. Daher verstärkt die Auswerteeinheit die elektrischen Polarisationsladungen in elektrische Gleichspannungen und linearisiert die elektrischen Gleichspannungen unter Verwendung von Kalibrierdaten des Sensorelements. Die Linearisierung reduziert die Messfehler der Kraftwerte. Allgemein und auch im Sinne der Erfindung bezeichnet der Begriff "Linearität" die Abweichung der vom Sensorelement unter der Wirkung der Schweisskraft erzeugten Kraftsignale zur Grösse der tatsächlich wirkenden Schweisskraft. Die Linearität wird in Prozent des Vollbereichsignals (%FS) angegeben. Die linearisierten Kraftsignale der Vorrichtung haben eine hohe Linearität von kleiner/gleich 1%FS und geben somit die zu messende Schweisskraft mit hoher Genauigkeit wieder. Auch weist ein Sensorelement aus piezoelektrischem Material eine im Vergleich zu Dehnungsmessstreifen kleine Messunsicherheit auf. Im Sinne der vorliegenden Erfindung bezeichnet der Begriff "Messunsicherheit" die Genauigkeit der Übereinstimmung zeitlich aufeinanderfolgender Messungen der Schweisskraft. Die Messunsicherheit des Sensorelements aus piezoelektrischem Material ist kleiner/gleich 0.01%, was rund zwei Grössenordnungen kleiner als bei Dehnungsmessstreifen ist.

In einer weiteren vorteilhaften Ausführungsform stellt die Auswerteeinheit die linearisierten elektrischen Gleichspannungen als analoge Kraftsignale und als digitale Kraftsignale bereit; wobei die Auswerteeinheit die Messwerte als analoge Messsignale oder digitale Messsignale bereitstellt; wobei die Vorrichtung eine elektrische Durchführung aufweist; wobei die Auswerteeinheit die analogen Kraftsignale und die digitalen Kraftsignale an die elektrische Durchführung ableitet; wobei die Auswerteeinheit die analogen Messsignale und die digitalen Messsignale an die elektrische Durchführung ableitet; und wobei an der elektrischen Durchführung von einer Umgebung ausserhalb der Vorrichtung aus, wahlweise analoge Kraftsignale und digitale Kraftsignale sowie analoge Messsignale und digitale Messsignale abgreifbar sind.

Somit sind an der elektrischen Durchführung der Vorrichtung wahlweise analoge Kraftsignale und digitale Kraftsignale als auch analoge Messsignale und digitale Messsignale abgreifbar. Dies vereinfacht die Messung der Schweisskraft und die Erfassung der elektrischen Schweissspannung während des Schweissvorgangs durch die Vorrichtung, da die Vorrichtung sowohl an eine in der Umgebung ausserhalb der Vorrichtung bereits vorhandene analoge als auch an eine digitale Messkette anschliessbar ist. In der Messkette erfolgt eine weitergehende Auswertung der Kraftsignale und der Messsignale, beispielsweise um die Qualität des Schweissvorgangs zu Überwachen.

### Kurze Beschreibung der Figuren

Im Folgenden wird die Erfindung anhand von Ausführungsbeispielen unter Beizug der Figuren näher erklärt. Es zeigen
- Fig. 1: eine Ansicht teilweise im Schnitt einer Querebene YZ eines Teils einer ersten Ausführungsform der Vorrichtung 1 zur Messung der Schweisskraft und zur Erfassung der elektrischen Schweissspannung während des Schweissvorgangs einer Widerstandschweisseinrichtung 2;
- Fig. 2: eine Ansicht teilweise im Schnitt einer Längsebene XZ eines Teils einer zweiten Ausführungsform der Vorrichtung 1 zur Messung der Schweisskraft und zur Erfassung der elektrischen Schweissspannung während des Schweissvorgangs einer Widerstandschweisseinrichtung 2;
- Fig. 3: eine Ansicht teilweise im Schnitt einer Querebene YZ eines Teils einer dritten Ausführungsform der Vorrichtung 1 zur Messung der Schweisskraft und zur Erfassung der elektrischen Schweissspannung während des Schweissvorgangs einer Widerstandschweisseinrichtung 2;
- Fig. 4: eine Explosionsdarstellung eines Teils der ersten Ausführungsform der Vorrichtung 1 gemäss Fig. 1;
- Fig. 5: eine perspektivische Ansicht eines Teils der Ausführungsform der Vorrichtung 1 gemäss einer der Fig. 1 bis 3;
- Fig. 6: eine perspektivische Ansicht der ersten Ausführungsform der Vorrichtung 1 gemäss Fig. 1; und
- Fig. 7: eine perspektivische Ansicht der Ausführungsform der Vorrichtung 1 gemäss einer der Fig. 1 oder 2.

In allen Figuren bezeichnen gleiche Bezugszeichen gleiche Gegenstände.

### Wege zur Ausführung der Erfindung

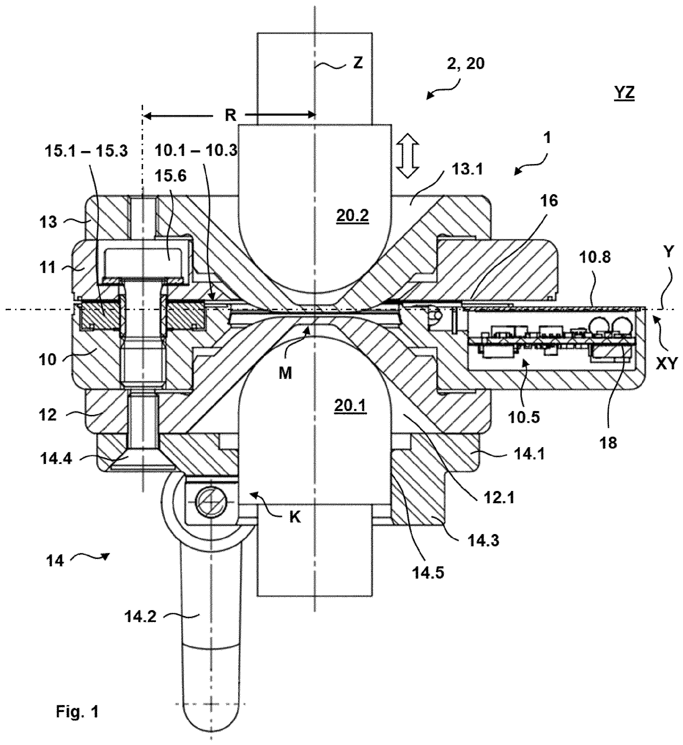

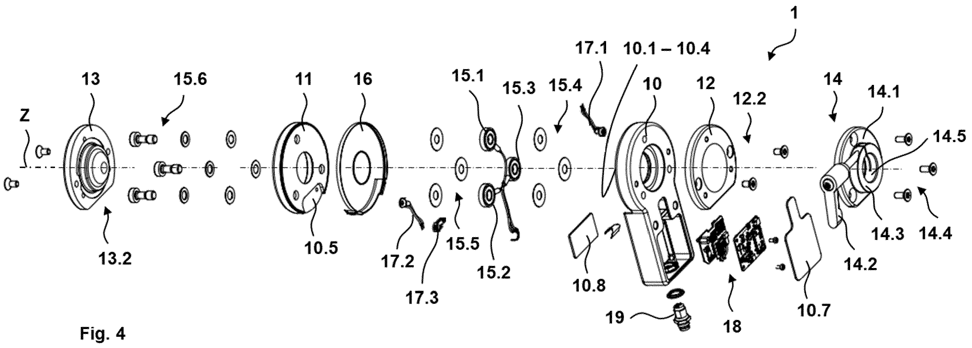

Die Fig. 1 bis 7 zeigen eine Vorrichtung 1 zur Messung der Schweisskraft und zur Erfassung der elektrischen Schweissspannung während des Schweissvorgangs einer Widerstandschweisseinrichtung 2. Die Vorrichtung 1 und die Widerstandschweisseinrichtung 2 sind in einem rechtwinkligen Koordinatensystem mit einer Längsachse X, einer Querachse Y und einer Vertikalachse Z angeordnet. Von der Längsachse X und der Querachse Y wird eine Horizontalebene XY aufgespannt. Von der Längsachse X und der Vertikalachse Z wird eine Längsebene XZ aufgespannt. Von der Querachse Y und der Vertikalachse Z wird eine Querebene YZ aufgespannt. Nachfolgend wird das Eigenschaftswort "untere" für einen Gegenstand der Vorrichtung 1 oder der Widerstandschweisseinrichtung 2 verwendet, der in den Ansichten gemäss Fig. 1 bis 3 unterhalb der Horizontalebene XY angeordnet ist und das Eigenschaftswort "obere" wird für einen Gegenstand der Vorrichtung 1 oder der Widerstandschweisseinrichtung 2 verwendet, der in den Ansichten gemäss Fig. 1 bis 3 oberhalb der Horizontalebene XY angeordnet ist.

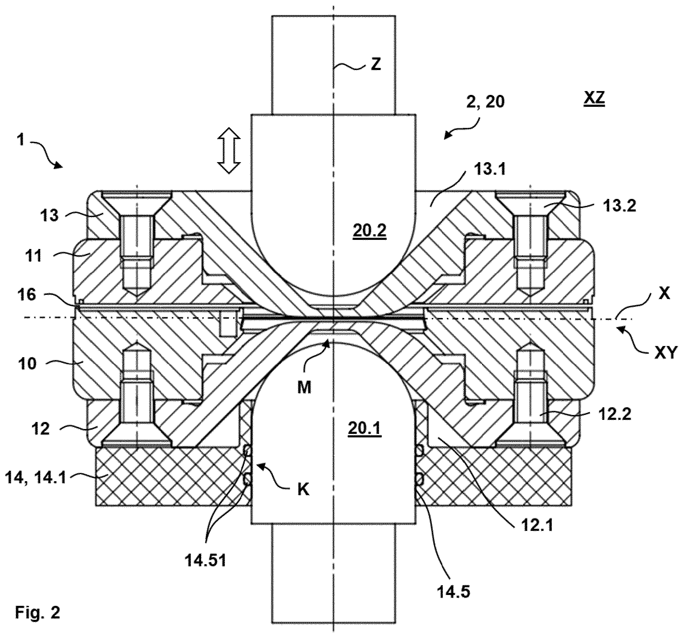

Die Widerstandsschweisseinrichtung 2 weist eine Schweisszange 20 mit einem unteren Elektrodenarm 20.1 und einem oberen Elektrodenarm 20.2 auf. Der untere Elektrodenarm 20.1 kann ortsfest angeordnet sein, der obere Elektrodenarm 20.2 ist beweglich angeordnet. Die beiden Elektrodenarme 20.1, 20.2 sind aus elektrisch leitfähigem Material wie Kupfer, Kupferlegierungen, usw. Durch Verfahren des oberen Elektrodenarms 20.2 entlang der Vertikalachse Z lässt sich die Schweisszange 20 öffnen und schliessen. Das Verfahren des oberen Elektrodenarms 20.2 entlang der Vertikalachse Z ist in den Ansichten gemäss Fig. 1 und 2 durch einen Doppelpfeil gekennzeichnet. Während eines Schweissvorgangs üben die Elektrodenarme 20.1, 20.2 eine Schweisskraft entlang der Vertikalachse Z aus und zwischen den Elektrodenarmen 20.1, 20.2 liegt eine elektrische Schweissspannung an.

Bei geöffneter Schweisszange 20 lässt sich die Vorrichtung 1 an den Elektrodenarmen 20.1, 20.2 platzieren. Dazu weist die Vorrichtung 1 eine untere Kontaktbuchse 12 und eine obere Kontaktbuchse 13 auf. Die beiden Kontaktbuchsen 12, 13 sind aus mechanisch beständigem Material wie Stahl, Werkzeugstahl, usw. Die untere Kontaktbuchse 12 ist zylinderförmig und weist eine untere konische Vertiefung 12.1 auf. Auch die obere Kontaktbuchse 13 ist zylinderförmig und weist eine obere konische Vertiefung 13.1 auf. Vorzugsweise haben die beiden konischen Vertiefungen 12.1, 13.1 einen Öffnungswinkel von 45° bezüglich der Vertikalachse Z. Jede der beiden konischen Vertiefungen 12.1, 13.1 kann eine vorderste Spitze eines Elektrodenarms 20.1, 20.2 aufnehmen und bezüglich der Vertikalachse Z zentrieren. Vorzugsweise wird die Vorrichtung 1 durch Aufsetzen der unteren Kontaktbuchse 12 auf den unteren Elektrodenarm 20.1 an den Elektrodenarmen 20.1, 20.2 platziert. Dabei kommt die vorderste Spitze des unteren Elektrodenarms 20.1 in der unteren konischen Vertiefung 12.1 zentriert zu liegen. Bei Schliessen der Schweisszange 20 fährt der obere Elektrodenarm 20.2 in die obere konische Vertiefung 13.1 und wird dabei zentriert.

Die Vorrichtung 1 weist ein Gehäuseunterteil 10 und ein Gehäuseoberteil 11 auf. Das Gehäuseunterteil 10 und das Gehäuseoberteil 11 sind aus mechanisch beständigem Material wie Stahl, Werkzeugstahl, usw. Das Gehäuseunterteil 10 und das Gehäuseoberteil 11 sind bereichsweise zylinderförmig.

Die Vorrichtung 1 weist ein unteres Befestigungsmittel 12.1 und ein oberes Befestigungsmittel 13.1 auf. Das untere Befestigungsmittel 12.1 und das obere Befestigungsmittel 13.1 sind aus mechanisch beständigem Material wie Stahl, Werkzeugstahl, usw. Vorzugsweise sind das untere Befestigungsmittel 12.2 und das obere Befestigungsmittel 13.2 Schrauben. Die untere Kontaktbuchse 12 ist über ein unteres Befestigungsmittel 12.2 aussenseitig am Gehäuseunterteil 10 befestigt. Das Eigenschaftswort "aussenseitig" bezeichnet eine vom Gehäuseoberteil 11 abgewandte Seite des Gehäuseunterteils 10. Das untere Befestigungsmittel 12.2 in Form einer Schraube ragt durch eine Öffnung der unteren Kontaktbuchse 12, mit einem Schraubenkopf liegt es aussenseitig an der unteren Kontaktbuchse 12 auf, es ist in Gewindegänge des Gehäuseunterteils 10 schraubbar und bildet eine Schraubverbindung. Die Schraubverbindung presst die untere Kontaktbuchse 12 gegen das Gehäuseunterteil 10. Die obere Kontaktbuchse 13 ist über ein oberes Befestigungsmittel 13.2 aussenseitig am Gehäuseoberteil 11 befestigt. Und das Eigenschaftswort "aussenseitig" bezeichnet eine vom Gehäuseunterteil 10 abgewandte Seite des Gehäuseoberteils 10. Das obere Befestigungsmittel 13.2 in Form einer Schraube ragt durch eine Öffnung der oberen Kontaktbuchse 13, mit einem Schraubenkopf liegt es aussenseitig an der oberen Kontaktbuchse 13 auf, es ist in Gewindegänge des Gehäuseoberteils 11 schraubbar und bildet eine Schraubverbindung. Die Schraubverbindung presst die obere Kontaktbuchse 13 gegen das Gehäuseoberteil 11.

Die Vorrichtung 1 weist einen Isolator 16 auf. Der Isolator 16 besteht aus elektrisch isolierendem und mechanisch steifem Material wie Keramik, Polyimid, usw. Der Isolator 16 ist bezüglich der Vertikalachse Z zwischen dem Gehäuseunterteil 10 und dem Gehäuseoberteil 11 angeordnet. Der Isolator 16 isoliert das Gehäuseunterteil 10 elektrisch vom Gehäuseoberteil 11. Das Gehäuseunterteil 10 und das Gehäuseoberteil 11 sind über den Isolator 16 mechanisch miteinander verbunden.

Das Gehäuseunterteil 10 und das Gehäuseoberteil 11 umschliessen im verbundenen Zustand mindestens einen Innenraum 10.1 - 10.5. Die mechanische Verbindung vom Gehäuseunterteil 10 mit dem Gehäuseoberteil 11 ist hermetisch dicht. Der Ausdruck "hermetisch dicht" bedeutet im Sinne der Erfindung, dass Luftfeuchtigkeit, Flüssigkeiten und Gase aus der Umgebung nicht in den Innenraum 10.1 - 10.5 gelangen können. Die Umgebung ist der dreidimensionale Raum ausserhalb der Vorrichtung 1.

Die Vorrichtung 1 weist mindestens ein Sensorelement 15.1 - 15.3 und eine Auswerteeinheit 18 auf, welche im Innenraum 10.1 - 10.5 angeordnet sind. Das Gehäuseunterteil 10 und das Gehäuseoberteil 11 schützen so das Sensorelement 15.1 - 15.3 und die Auswerteeinheit 18 vor schädlichen Umwelteinflüssen wie Verunreinigungen (Staub, Feuchtigkeit, usw.) und vor elektrischen und elektromagnetischen Störeffekten in Form von elektromagnetischer Strahlung.

Das Sensorelement 15.1 - 15.3 misst die Schweisskraft, welche von den Elektrodenarmen 20.1, 20.2 während eines Schweissvorgangs ausgeübt wird. Das Sensorelement 15.1 - 15.3 erzeugt für die gemessene Schweisskraft Kraftwerte. Das Sensorelement 15.1 - 15.3 ist bezüglich der Vertikalachse Z zwischen dem Gehäuseunterteil 10 und das Gehäuseoberteil 11 angeordnet und liegt in der Horizontalebene XY. Das Sensorelement 15.1 - 15.3 weist ein Sensorgehäuse aus mechanisch beständigem Material wie Stahl, Werkzeugstahl, usw. auf. Vorzugsweise ist das Sensorelement 15.1 - 15.3 hohlzylinderförmig mit zwei Sensorstirnflächen, zwei Sensormantelflächen und einer zentralen Sensorbohrung. Die Sensorstirnflächen liegen parallel zur Horizontalebene XY. Eine Bohrungsachse der zentralen Sensorbohrung liegt parallel zur Vertikalachse Z.

Vorzugsweise weist das Sensorelement 15.1 - 15.3 piezoelektrisches Material aus einem Einkristall wie Quarz (SiO₂), Calcium-Gallo-Germanat (Ca₃Ga₂Ge₄O₁₄ oder CGG), Langasit (La₃Ga₅SiO₁₄ oder LGS), Turmalin, Galliumorthophosphat, usw. und aus Piezokeramik wie Blei-Zirkonat-Titanat (Pb[ZrₓTi₁₋ₓ]O₃, 0 ≤ x ≤ 1), usw. auf. Unter der Wirkung der zu messenden Schweisskraft erzeugt das piezoelektrische Material Kraftwerte in Form von piezoelektrischen Ladungen. Das piezoelektrische Material ist so orientiert, dass es für die entlang der Vertikalachse Z wirkende Schweisskraft die höchste Empfindlichkeit hat. Im Sinne der Erfindung ist die Empfindlichkeit ein Grössenverhältnis der unter der Wirkung der Schweisskraft erzeugten Anzahl elektrischer Polarisationsladungen und der Grösse der auf das piezoelektrische Material wirkenden Schweisskraft. Bei höchster Empfindlichkeit erzeugt das piezoelektrische Material eine grösste Anzahl elektrischer Polarisationsladungen.

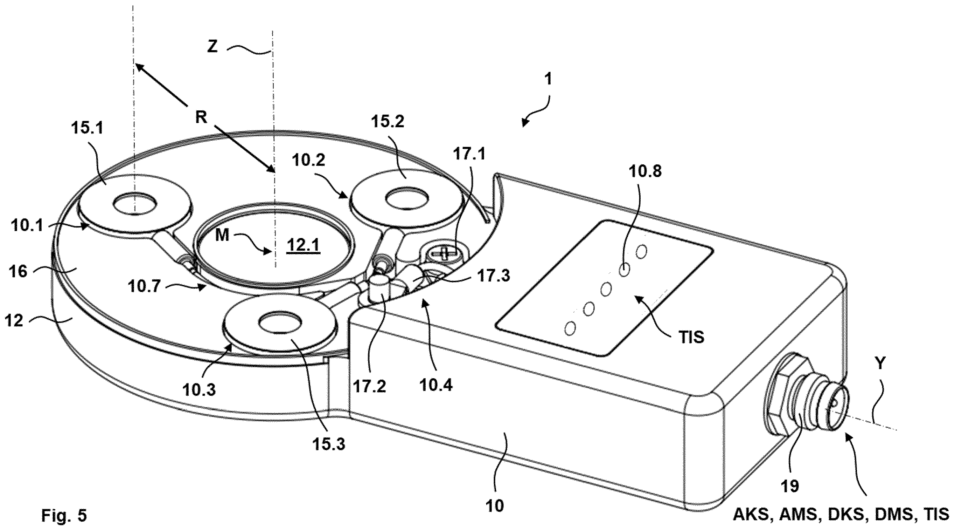

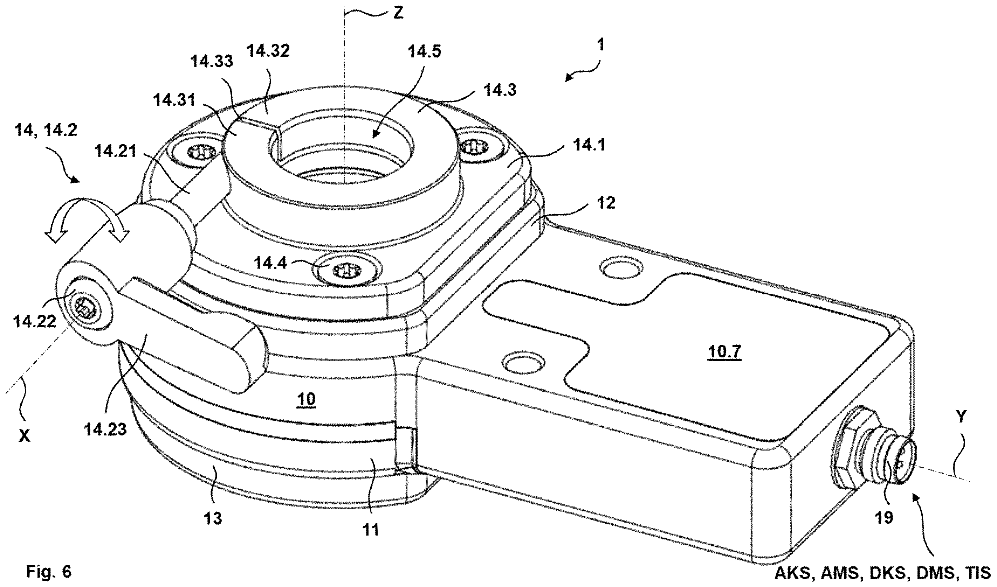

Wie in den perspektivischen Ansichten gemäss Fig. 5 und 6 dargestellt, besteht das Sensorelement 15.1 - 15.3 vorzugsweise aus einem ersten Sensorelement 15.1, einem zweiten Sensorelement 15.2 und einem dritten Sensorelement 15.3. Das erste Sensorelement 15.1 ist in einem ersten Innenraum 10.1 angeordnet. Das zweite Sensorelement 15.2 ist in einem zweiten Innenraum 10.2 angeordnet. Das dritte Sensorelement 15.3 ist in einem dritten Innenraum 10.3 angeordnet. Vorzugsweise liegen alle drei Sensorelemente 15.1 - 15.3 in der Horizontalebene XY. Vorzugsweise sind die drei Sensorelemente 15.1 - 15.3 in der gleichen radialen Distanz R zur Vertikalachse Z angeordnet. Vorzugsweise sind die drei Sensorelemente 15.1 - 15.3 in einem Winkel von 120° gleichmässig beabstandet zueinander angeordnet. Vorzugsweise liegt ein Masseschwerpunkt M der Vorrichtung 1 innerhalb der radialen Distanz R. Vorzugsweise liegt ein Masseschwerpunkt M der Vorrichtung 1 wie in den Fig. 1 bis 3, 5 und 6 dargestellt, weitgehend auf der Längsachse X.

Vorzugsweise sind die drei Sensorelementen 15.1 - 15.3 identisch und messen die gleiche, entlang der Längsachse X wirkende Schweisskraft. Vorzugsweise ist das Sensorelement 15.1 - 15.3 ein Einkomponenten-Kraftaufnehmer, welcher als einzige Kraftkomponente die entlang der Vertikalachse Z wirkende Schweisskraft misst. Ein solcher Einkomponenten-Kraftaufnehmer wird von der Anmelderin als Typ 9133C kommerziell vertrieben und ist im Datenblatt 9130C_003-418d-04.21 beschrieben. Der Einkomponenten-Kraftaufnehmer weist einen durch die äussere Sensormantelfläche begrenzten Aussendurchmesser von 16.0mm auf, eine zentrale Sensorbohrung mit einem Innendurchmesser von 6.1mm und zwischen den Sensorstirnflächen eine Höhe von 3.5mm auf. Der Einkomponenten-Kraftaufnehmer Typ 9133C weist eine Empfindlichkeit von 4pC/N auf.

Die Vorrichtung 1 weist ein unteres Isolationselement 15.4 und ein oberes Isolationselement 15.5 auf. Das untere Isolationselement 15.4 und das obere Isolationselement 15.5 sind scheibenförmig und weisen eine zentrale Durchgangsöffnung auf. Das untere Isolationselement 15.4 und das obere Isolationselement 15.5 bestehen aus elektrisch isolierendem und mechanisch steifem Material wie Keramik, Polyimid, usw. Das untere Isolationselement 15.4 ist bezüglich der Vertikalachse Z zwischen dem Gehäuseunterteil 10 und dem Sensorelement 15.1 - 15.3 angeordnet. Das obere Isolationselement 15.5 ist bezüglich der Vertikalachse Z zwischen dem Sensorelement 15.1 - 15.3 und dem Gehäuseoberteil 11 angeordnet. Vorzugsweise weist die Vorrichtung 1 für jedes Sensorelement 15.1 - 15.3 genau ein unteres Isolationselement 15.4 und genau ein oberes Isolationselement 15.5 auf. Das untere Isolationselement 15.4 und das obere Isolationselement 15.5 isolieren das Sensorelement 15.1 - 15.3 elektrisch gegenüber dem Gehäuseunterteil 10 und dem Gehäuseoberteil 11. Somit liegt das Sensorelement 15.1 - 15.3 nicht auf dem Potenzial der elektrischen Schweissspannung von einigen V, was die Messung der Schweisskraft verfälschen kann.

Vorzugsweise weist das Sensorelement 15.1 - 15.3 Abgreifelektroden auf. Die Abgreifelektroden greifen die elektrischen Polarisationsladungen vom piezoelektrischen Material ab. In den Figuren sind die Abgreifelektroden nicht eingezeichnet.

Vorzugsweise weist die Vorrichtung 1 mindestens ein Vorspannelement 15.6 auf. Damit die Abgreifelektroden alle erzeugten elektrischen Polarisationsladungen vom piezoelektrischen Material abgreifen, und keine elektrische Polarisationsladungen auf dem piezoelektrischen Material verbleiben und so die Messung der Schweisskraft verfälschen, werden die Abgreifelektroden durch das Vorspannelement 15.6 mechanisch gegen das piezoelektrische Material vorgespannt. Durch die mechanische Vorspannung werden Mikroporen zwischen den Abgreifelektroden und dem piezoelektrischen Material geschlossen. Vorzugsweise weist die Vorrichtung 1 für jedes Sensorelement 15.1 - 15.3 genau ein Vorspannelement 15.6 auf. Das Vorspannelement 15.6 ragt durch die zentrale Durchgangsöffnung des unteren Isolationselements 15.4, die zentrale Sensorbohrung des Sensorelements 15.1 - 15.3, die zentrale Durchgangsöffnung des oberen Isolationselements 15.5 und eine Öffnung im Gehäuseoberteil 11. Vorzugsweise ist das Vorspannelement 15.6 eine Schraube, welche Schraube mit einem Schraubenkopf aussenseitig auf dem Gehäuseoberteil 11 aufliegt und welche Schraube in Gewindegänge des Gehäuseunterteils 10 schraubbar ist und eine Schraubverbindung bildet. Die Schraubverbindung presst das Sensorelement 15.1 - 15.3 gegen das Gehäuseunterteil 10. Auch hier bezeichnet das Eigenschaftswort "aussenseitig" eine vom Gehäuseunterteil 10 abgewandte Seite des Gehäuseoberteils 11.

Vorzugsweise ist das Sensorelement 15.1 - 15.3 im Innenraum 10.1 - 10.5 im Krafthauptschluss der Schweisskraft angeordnet. Dazu wirkt der weitgehend grösste Teil der Schweisskraft entlang der Vertikalachse Z auf das Sensorelement 15.1 - 15.3 und nur ein geringer Teil der Schweisskraft fliesst über den Isolator 16 und das Vorspannelement 15.6. Im Sinne der Erfindung hat das Eigenschaftswort "weitgehend" die Bedeutung von "grösser/gleich 90%".

Das Sensorelement 15.1 - 15.3 weist mindestens eine elektrische Leitung auf. Die elektrische Leitung ist elektrisch mit der Auswerteeinheit 18 verbunden. Über die elektrische Leitung leitet das Sensorelement 15.1 - 15.3 die gemessene Schweisskraft als Kraftwerte zur Auswerteeinheit 18 ab. Vorzugsweise weist jede der drei Sensoreinheiten 15.1 - 15.3 eine elektrische Leitung auf.

Die Vorrichtung 1 weist mindestens ein Bauelement 17.1 - 17,3 auf. Vorzugsweise ist das Bauelement 17.1 - 17.3 in einem vierten Innenraum 10.4 angeordnet. Vorzugsweise umfasst das Bauelement 17.1 - 17.3 eine untere Elektrode 17.1, eine obere Elektrode 17.2 und einen Optokoppler 17.3. Die untere Elektrode 17.1 ist innenseitig am Gehäuseunterteil 10 befestigt. Das Eigenschaftswort "innenseitig" bezeichnet in diesem Zusammenhang eine dem Gehäuseunterteil 10 zugewandte Seite des Gehäuseoberteils 10. Die obere Elektrode 17.2 ist innenseitig am Gehäuseoberteil 11 befestigt. Das Eigenschaftswort "innenseitig" bezeichnet in diesem Zusammenhang eine dem Gehäuseoberteil 11 zugewandte Seite des Gehäuseunterteils 10. Die untere Elektrode 17.1 und die obere Elektrode 17.2 sind elektrisch mit dem Optokoppler 17.3 verbunden. Der Optokoppler 17.3 weist galvanisch voneinander getrennte Ein- und Ausgänge auf. Die zwei Elektroden 17.1, 17.2 erfassen die zwischen den Elektrodenarmen 20.1, 20.2 anliegende elektrische Schweissspannung und der Optokoppler 17.3 wandelt die erfasste elektrische Schweissspannung in Messwerte. Die am Ausgang des Optokopplers anliegenden Messwerte sind von der am Eingang des Optokopplers anliegenden elektrischen Schweissspannung galvanisch getrennt. Die Messwerte sind elektrische Spannungen, mit einer Amplitude, die proportional zur Grösse der elektrischen Schweissspannung ist. Die Messwerte können digitale Messwerte oder analoge Messwerte sein. Der Optokoppler 17.3 weist mindestens eine elektrische Leitung auf und ist über die elektrische Leitung mit der Auswerteeinheit 18 verbunden und leitet die Messwerte zur Auswerteeinheit 18 ab.

Die Auswerteeinheit 18 wertet die Kraftwerte und die Messwerte aus. Die Auswerteeinheit 18 ist in einem fünften Innenraum 10.5 angeordnet. Vorzugsweise kommunizieren die drei Innenräume 10.1 - 10.3 der drei Sensorelemente 15.1 - 15.3 und der vierte Innenraum 10.4 des Bauelements 17.1 - 17.3 mit dem fünften Innenraum 10.5 der Auswerteeinheit 18 über Gänge 10.6 im Gehäuseunterteil 10. In den Gängen 10.6 des Gehäuseunterteils 10 sind die elektrischen Leitungen der drei Sensorelemente 15.1 - 15.3 und die elektrische Leitung des Optokopplers 17.3 verlegt.

Die räumlich kompakte Anordnung von drei Sensorelementen 15.1 - 15.3, einem Bauelement 17.1 - 17.3 und einer Auswerteeinheit 18 führt zu einer signifikanten Erniedrigung von Gewicht und Baugrösse der Vorrichtung 1. Im Vergleich mit dem Schweisskraft-Kalibriertransmitter Typ 9831C ist das Gewicht der Vorrichtung 1 von 1.40kg auf weniger als die Hälfte auf 0.64kg erniedrigt.

Die Auswerteeinheit 18 ist eine elektrische Schaltung mit elektrischen und elektronischen Komponenten, welche auf mindestens einer Leiterplatte montiert sind. Zum Einbringen der Auswerteeinheit 18 in den fünften Innenraum 10.5 weist das Gehäuseunterteil 10 eine Deckplatte 10.7 auf. Die Deckplatte 10.7 ist aus mechanisch beständigem Material wie Stahl, Werkzeugstahl, usw. Die Deckplatte 10.7 ist am Gehäuseunterteil 10 befestigt. Die Befestigung der Deckplatte 10.7 am Gehäuseunterteil 10 verschliesst den fünften Innenraum 10.5 hermetisch dicht. Die Befestigung der Deckplatte 10.7 am Gehäuseunterteil 10 ist lösbar. Im gelösten Zustand der Befestigung der Deckplatte 10.7 am Gehäuseunterteil 10 ist der fünfte Innenraum 10.5 zum Einbringen der Auswerteeinheit 18 von ausserhalb der Vorrichtung 1 zugänglich.

Die Auswerteeinheit 18 ist elektrisch gegenüber dem Gehäuseunterteil 10 und dem Gehäuseoberteil 11 isoliert. Somit liegt die Auswerteeinheit 18 nicht auf dem Potenzial der elektrischen Schweissspannung von einigen V, was die Auswertung der gemessenen Schweisskraft und die Auswertung der gemessenen elektrischen Schweissspannung verfälschen kann.

Vorzugsweise weist die Auswerteeinheit 18 eine Ladungsverstärkereinheit auf, welche die von den elektrischen Leitungen abgeleiteten Kraftwerte in Form von elektrischen Polarisationsladungen in elektrische Gleichspannungen verstärkt. Die elektrischen Gleichspannungen sind analoge Kraftsignale AKS der Auswerteeinheit 18. Vorzugsweise digitalisiert die Auswerteeinheit 18 die analogen Kraftsignale AKS in digitale Kraftsignale DKS. Vorzugsweise verfügt die Auswerteeinheit 18 über Kalibrierdaten des Sensorelements 15.1 - 15.3, mit welchen Kalibrierdaten die Auswerteeinheit 18 die Kraftsignale linearisiert. Dabei kann die Auswerteeinheit 18 analoge Kraftsignale AKS oder digitale Kraftsignale DKS linearisieren. Vorzugsweise sind die Kalibrierdaten eine Kalibrierkurve mit Koeffizienten einer Polynomfunktion.

Vorzugsweise stellt die Auswerteeinheit 18 Messwerte der während des Schweissvorgangs erfassten elektrischen Schweissspannung als analoge Messsignale AMS oder digitale Messsignale DMS bereit.

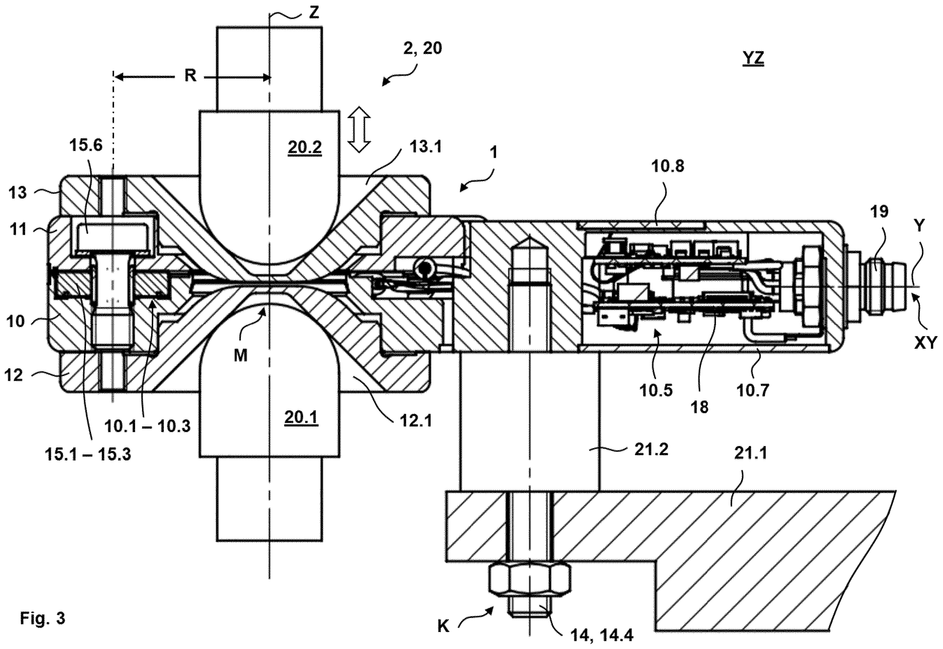

In den Ausführungsformen gemäss Fig. 3 bis 7 weist die Vorrichtung 1 eine elektrische Durchführung 19 auf. Die elektrische Durchführung 19 ist am Gehäuseunterteil 10 befestigt. Die Befestigung der elektrischen Durchführung 19 am Gehäuseunterteil 10 ist hermetisch dicht. Vorzugsweise ist die elektrische Durchführung 19 bereichsweise im fünften Innenraum 10.5 angeordnet. Die elektrische Durchführung 19 ist elektrisch mit der Auswerteeinheit 18 verbunden. Über die elektrische Durchführung 19 lassen sich die Kraftsignale und die Messsignale von der Auswerteeinheit 18 aus dem fünften Innenraum 10.5 nach ausserhalb der Vorrichtung 1 ableiten.

Vorzugsweise liegen an der elektrischen Durchführung 19 wahlweise analoge Kraftsignale AKS und digitale Kraftsignale DKS an. Vorzugsweise sind die an der elektrischen Durchführung 19 anliegenden analogen Kraftsignale AKS und digitalen Kraftsignale DKS linearisiert. Vorzugsweise liegen an der elektrischen Durchführung 19 wahlweise analoge Messsignale AMS und digitale Messsignale DMS an. Vorzugsweise weist die elektrische Durchführung 19 vier elektrische Kontakte auf. Die analogen Kraftsignale AKS und die analogen Messsignale AMS sowie die digitalen Kraftsignale DKZ und die digitalen Messsignale DMS liegen wahlweise an diesen vier Kontakten an. Über die elektrische Durchführung 19 lassen sich auch technische Informationssignale TIS wie eine Typenbezeichnung der Vorrichtung 1, eine Seriennummer der Vorrichtung 1, eine Webseite des Herstellers der Vorrichtung 1, ein Kalibrierdatum des Sensorelements 15.1 - 15.3, ein Messbereich des Sensorelements 15.1 - 15.3, eine Empfindlichkeit des Sensorelements 15.1 - 15.3, eine Betriebsbereitschaft der Vorrichtung 1, usw. aus der Auswerteeinheit 18 auslesen. Die technischen Informationssignale TIS vereinfachen die Messung der Schweisskraft, da die technischen Informationssignale TIS von einer Messkette in der Umgebung ausgelesen werden können und die weitergehende Auswertung der Kraftsignale und Messsignale in der Messkette vereinfachen. Über die elektrische Durchführung 19 lässt sich eine elektrische Versorgungsspannung zur Auswerteeinheit 18 führen.

Die elektrische Durchführung 19 ist elektrisch gegenüber dem Gehäuseunterteil 10 und dem Gehäuseoberteil 11 isoliert. Somit liegt die elektrische Durchführung 19 nicht auf dem Potenzial der elektrischen Schweissspannung von einigen V, was die Ableitung der Kraftsignale und der Messsignale verfälschen kann.

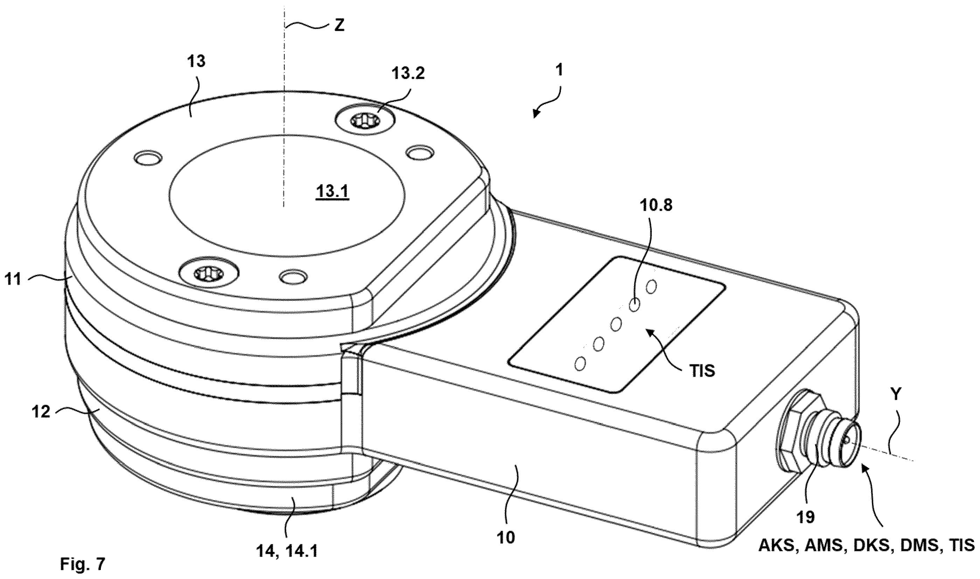

Auch wenn die Vorrichtung 1 autonom die Schweisskraft und die elektrische Schweissspannung messen kann, so muss der Betriebszustand der Vorrichtung 1 dennoch überwacht werden. Dazu weist die Vorrichtung 1 eine Anzeigevorrichtung 10.8 auf. Die Anzeigevorrichtung 10.8 ist am Gehäuseunterteil 10 befestigt. Die Befestigung der Anzeigevorrichtung 10.8 am Gehäuseunterteil 10 ist hermetisch dicht. Die Anzeigevorrichtung 10.8 weist mindestens eine Leuchte oder einen Bildschirm auf. Auf der Anzeigevorrichtung 10.8 lassen sich technische Informationssignale TIS wie ein Betriebszustand der Vorrichtung 1, usw. für einen menschlichen Operator ausserhalb der Vorrichtung 1 optisch darstellen. Gemäss Fig. 5 und 7 weist die Anzeigevorrichtung 10.8 fünf Leuchten auf. Zur optischen Darstellung der technischen Informationssignale TIS können die Leuchten in verschiedenen Farben leuchten, sie können verschieden lang blinken, usw. Der Betriebszustand der Vorrichtung 1 kann lauten "betriebsbereit", "nicht betriebsbereit", usw. Die Anzeigevorrichtung 10.8 ist auch aus 1m oder 2m Entfernung für den menschlichen Operator gut einsehbar und erlaubt den autonomen Betrieb der Vorrichtung 1. Dadurch lassen sich Störungen des Betriebszustands der Vorrichtung 1 einfach und rasch erkennen und durch den menschlichen Operator beheben, was wiederum den Zeitaufwand für die Messung der Schweisskraft und der elektrischen Schweissspannung gering hält.

Die Vorrichtung 1 weist ein Kupplungsmittel 14 auf. In der ersten Ausführungsform gemäss Fig. 1 ist das Kupplungsmittel 14 eine Klemmkupplung. In der zweiten Ausführungsform gemäss Fig. 2 ist das Kupplungsmittel 14 eine formschlüssige Kupplung. In der dritten Ausführungsform gemäss Fig. 3 ist das Kupplungsmittel 14 eine kraftschlüssige Kupplung. Das Kupplungsmittel 14 ist aus mechanisch beständigem Material wie Stahl, Werkzeugstahl, Aluminium, Thermoplast, usw.

In der ersten Ausführungsform gemäss Fig. 1 weist das Kupplungsmittel 14 einen Kupplungskörper 14.1 und mindestens ein weiteres Befestigungsmittel 14.4 auf. Der Kupplungskörper 14.1 ist über das weitere Kupplungsmittel 14.4 aussenseitig an der unteren Kontaktbuchse 12 befestigt. Das Eigenschaftswort "aussenseitig" bezeichnet eine vom Gehäuseunterteil 10 abgewandte Seite der unteren Kontaktbuchse 12. Vorzugsweise ist das weitere Befestigungsmittel 14.4 eine Schraube, welche Schraube durch eine Öffnung im Kupplungskörper 14.1 ragt, welche Schraube mit einem Schraubenkopf aussenseitig auf dem Kupplungskörper 14.1 aufliegt und welche Schraube in Gewindegänge der unteren Kontaktbuchse 12 schraubbar ist und eine Schraubverbindung bildet. Die Schraubverbindung presst den Kupplungskörper 14.1 gegen die untere Kontaktbuchse 12.

In der ersten Ausführungsform gemäss Fig. 1 weist das Kupplungsmittel 14 ein Klemmelement 14.3 auf. Das Klemmelement 14.3 ist einstückig mit dem Kupplungskörper 14.1 geformt. Vorzugsweise ist das Klemmelement 14.3 aussenseitig am Kupplungskörper 14.1 angeformt. Das Eigenschaftswort "aussenseitig" bezeichnet eine von der unteren Kontaktbuchse 12 abgewandte Seite des Kupplungskörpers 14.1. Kupplungskörper 14.1 und Klemmelement 14.3 sind hohlzylinderförmig.

In der ersten Ausführungsform gemäss Fig. 1 weist das Kupplungsmittel 14 eine Kupplungsöffnung 14.5 auf. Die Kupplungsöffnung 14.5 erstreckt sich entlang der Vertikalachse Z durch den Kupplungskörper 14.1 und das Klemmelement 14.3. Die Kupplungsöffnung 14.5 kommuniziert mit der konischen Vertiefung 12.1 der unteren Kontaktbuchse 12. Die Vorrichtung 1 lässt sich somit an den Elektrodenarmen 20.1, 20.2 platzieren, in dem das Kupplungsmittel 14 auf den unteren Elektrodenarm 20.1 gesetzt wird, derart dass der untere Elektrodenarm 20.1 durch die Kupplungsöffnung 14.5 ragt und die vorderste Spitze des unteren Elektrodenarms 20.1 in der unteren konischen Vertiefung 12.1 der unteren Kontaktbuchse 12 zentriert zu liegen kommt. Die Kupplungsöffnung 14.5 weist einen Durchmesser auf, welcher Durchmesser dem Aussendurchmesser des unteren Elektrodenarms 20.1 entspricht. Der Durchmesser der Kupplungsöffnung 14.5 und der Aussendurchmesser des unteren Elektrodenarms 20.1 haben ein geringes mechanisches Spiel von vorzugsweise 0.1mm.

In der ersten Ausführungsform gemäss Fig. 1 umschliesst das Klemmelement 14.3 die im Kupplungskörper 14.1 angeordnete Kupplungsöffnung 14.5 radial. Das Klemmelement 14.3 weist ein erstes Klemmelementende 14.31 und ein zweites Klemmelementende 14.32 auf. Die beiden Klemmelementenden 14.31, 14.32 sind durch einen Spalt 14.33 voneinander beabstandet. In der perspektivischen Ansicht gemäss Fig. 6 weist der Spalt 14.33 entlang der Längsachse X eine Breite von vorzugsweise 1mm auf.

In der ersten Ausführungsform gemäss Fig. 1 weist das Kupplungsmittel 14 ein Spannmittel 14.2 auf. Das Spannmittel 14.2 ist am Klemmelement 14.3 angeordnet. Das Spannmittel 14.2 weist ein Hülsenelement 14.21, ein Schraubelement 14.22 und ein Griffelement 14.23 auf. Das Hülsenelement 14.21 ist hohlzylinderförmig mit einer Hohlachse. In der perspektivischen Ansicht gemäss Fig. 6 erstreckt sich das Hülsenelement 14.21 entlang der Längsachse X. Das Hülsenelement 14.21 ist am ersten Klemmelementende 14.31 befestigt. Das Schraubelement 14.22 ist bereichsweise in der Hohlachse angeordnet und wird im Hülsenelement 14.21 durch Formschluss gehalten. Das Schraubelement 14.22 weist ein erstes Ende und ein zweites Ende auf. Am ersten Ende des Schraubelements 14.22 ist das Griffelement 14.23 angebracht. Über das das Griffelement 14.23 ist das Schraubelement 14.22 um die Längsachse X drehbar. Die Drehbarkeit des Schraubelements 14.22 um die Längsachse X ist in der perspektivischen Ansicht gemäss Fig. 6 durch einen gebogenen Doppelpfeil gekennzeichnet. Am zweiten Ende weist das Schraubelement 14.22 ein Aussengewinde auf. Durch Drehen um die Längsachse X ist das Aussengewinde am zweiten Ende des Schraubelements 14.22 in Gewindegänge im zweiten Klemmelementende 14.32 schraubbar und bildet eine Schraubverbindung. Durch Drehen des Schraubelements 14.22 in einer ersten Richtung um die Längsachse X schraubt sich das Schraubelement in das zweite Klemmelementende 14.32. Da das Schraubelement 14.22 im Hülsenelement 14.21 gehalten wird, und somit auch im ersten Klemmelementende 14.31, an dem das Hülsenelement 14.21 befestigt ist, verkleinert sich durch das Drehen die Breite des Spalts 14.33 entlang der Längsachse X. Die Verkleinerung der Breite des Spalts 14.33 ist stärker ausgeprägt als das mechanische Spiel zwischen dem Durchmesser der Kupplungsöffnung 14.5 und dem Aussendurchmesser des unteren Elektrodenarms 20.1, was dazu führt, dass im an den Elektrodenarmen 20.1, 20.2 platzierten Zustand der Vorrichtung 1, wo der untere Elektrodenarm 20.1 durch die Kupplungsöffnung 14.5 ragt, die Verkleinerung der Breite des Spalts 14.33 den unteren Elektrodenarm 20.1 im Klemmelement 14.3 einklemmt und eine Kupplungskraft K auf den unteren Elektrodenarm 20.1 ausübt. Das Kupplungsmittel 14 und der untere Elektrodenarm 20.1 kuppeln somit durch Klemmung. Die Kupplungskraft K ist so gross, um die Vorrichtung 1 mechanisch stabil mit der Schweisszange 2 zu kuppeln. Der Ausdruck "mechanisch stabil kuppeln" bedeutet im Sinne der Erfindung, dass die Vorrichtung 1 im Betrieb der Widerstandschweisseinrichtung 2 unverrückbar mit dem unteren Elektrodenarm 20.1 gekuppelt ist.

Auch in der zweiten Ausführungsform gemäss Fig. 2 weist das Kupplungsmittel 14 einen Kupplungskörper 14.1 auf. Der Kupplungskörper 14.1 ist aussenseitig an der unteren Kontaktbuchse 12 angeordnet. Das Eigenschaftswort "aussenseitig" bezeichnet eine vom Gehäuseunterteil 10 abgewandte Seite der unteren Kontaktbuchse 12. Vorzugsweise liegt der Kupplungskörper 14.1 in der unteren konischen Vertiefung 12.1 der unteren Kontaktbuchse 12.

Der Kupplungskörper 14.1 der zweiten Ausführungsform gemäss Fig. 2 ist ebenfalls hohlzylinderförmig und weist eine Kupplungsöffnung 14.5 auf. Die Kupplungsöffnung 14.5 erstreckt sich entlang der Vertikalachse Z durch den Kupplungskörper 14.1. Die Kupplungsöffnung 14.5 kommuniziert mit der konischen Vertiefung 12.1 der unteren Kontaktbuchse 12. Die Kupplungsöffnung 14.5 weist einen Durchmesser auf, welcher Durchmesser dem Aussendurchmesser des unteren Elektrodenarms 20.1 entspricht. In der Kupplungsöffnung 14.5 ist ein Halteelement 14.51 angeordnet. Das Halteelement 14.51 ist ringförmig und in einer Nut der Kupplungsöffnung 14.5 angeordnet. Das Halteelement 14.51 ist aus elastischem Material wie Kautschuk, Perfluorkautschuk, usw. Vorzugsweise sind in der Kupplungsöffnung 14.5 zwei Halteelemente 14.51 angeordnet. Das in der Nut angeordnete Halteelement 14.51 ragt radial leicht in die Kupplungsöffnung 14.5 hinein. Die Vorrichtung 1 lässt sich somit an den Elektrodenarmen 20.1, 20.2 platzieren, in dem das Kupplungsmittel 14 auf den unteren Elektrodenarm 20.1 gesetzt wird, derart dass der untere Elektrodenarm 20.1 durch die Kupplungsöffnung 14.5 ragt und die vorderste Spitze des unteren Elektrodenarms 20.1 in der unteren konischen Vertiefung 12.1 der unteren Kontaktbuchse 12 zentriert zu liegen kommt. Dabei wird das in der Nut angeordnete Halteelement 14.51 vom unteren Elektrodenarm 20.1 radial gestaucht. Das Kupplungsmittel 14 und der untere Elektrodenarm 20.1 kuppeln somit durch Formschluss. Das gestauchte Halteelement 14.51 übt eine Kupplungskraft K auf den unteren Elektrodenarm 20.1 aus.

In der dritten Ausführungsform gemäss Fig. 3 besteht das Kupplungsmittel 14 lediglich aus einem weiteren Befestigungsmittel 14.4. Die Widerstandschweisseinrichtung 2 weist einen Träger 21.1 und ein Lagerelement 21.2 auf. Der Träger 21.1 ist derart nahe der beiden Elektrodenarme 20.1, 20.2 angeordnet, dass die Vorrichtung 1 im an den beiden Elektrodenarmen 20.1, 20.2 platzierten Zustand, mechanisch mit dem Träger 21.1 kuppelbar ist. Das Lagerelement 21.2 ist vorzugsweise aus elastischem Material wie Gummi, Kautschuk, usw. und lagert die Vorrichtung 1 elastisch am Träger 21.1. Vibrationen werden durch das Lagerelement 21.2 gedämpft und können nicht von der Widerstandschweisseinrichtung 2 zur Vorrichtung 1 gelangen und die Messung der Schweisskraft und die Erfassung der elektrischen Schweissspannung während des Schweissvorgangs verfälschen. Auch ist die Vorrichtung 1 über das Lagerelement 21.2 elektrisch vom elektrischen Potenzial der Widerstandschweisseinrichtung 2 isoliert, so dass Schwankungen im elektrischen Potenzial der Widerstandschweisseinrichtung 2 sich nicht auf die Messung der Schweisskraft und die Erfassung der elektrischen Schweissspannung während des Schweissvorgangs auswirken können. Vorzugsweise besteht das weitere Befestigungsmittel 14.4 aus zwei Schrauben. Der Träger 21.1 weist zwei Durchgangsbohrungen für die zwei Schrauben auf. Jede Schraube ragt durch eine Durchgangsbohrung des Trägers 21.1. Mit einem Schraubenkopf liegt jede Schraube aussenseitig am Träger 21.1 auf. Und jede Schraube ist in Gewindegänge des Gehäuseunterteils 10 schraubbar und bildet so eine Schraubverbindung. Das Eigenschaftswort "aussenseitig" bezeichnet eine vom Gehäuseunterteil 10 abgewandte Seite des Trägers 21.1. Die Schraubverbindung des weiteren Befestigungsmittels 14.4 presst das Gehäuseunterteil 10 gegen den Träger 21. Das Kupplungsmittel 14 kuppelt somit das Gehäuseunterteil 10 und den Träger 21.1 mechanisch durch Kraftschluss.

### Bezugszeichenliste

- 1: Vorrichtung
- 2: Widerstandsschweisseinrichtung
- 10: Gehäuseunterteil
- 10.1: erster Innenraum
- 10.2: zweiter Innenraum
- 10.3: dritter Innenraum
- 10.4: vierter Innenraum
- 10.5: fünfter Innenraum
- 10.6: Gang
- 10.7: Deckplatte
- 10.8: Anzeigevorrichtung
- 11: Gehäuseoberteil
- 12: untere Kontaktbuchse
- 12.1: untere konische Vertiefung
- 12.2: unteres Befestigungsmittel
- 13: obere Kontaktbuchse
- 13.1: obere konische Vertiefung
- 13.2: oberes Befestigungsmittel
- 14: Kupplungsmittel
- 14.1: Kupplungskörper
- 14.2: Spannelement
- 14.21: Hülsenelement
- 14.22: Schraubelement
- 14.23: Griffelement
- 14.3: Klemmelement
- 14.31: erstes Klemmelementende
- 14.32: zweites Klemmelementende
- 14.33: Spalt
- 14.4: weiteres Befestigungsmittel
- 14.5: Kupplungsöffnung
- 14.51: Halteelement
- 15.1: erstes Sensorelement
- 15.2: zweites Sensorelement
- 15.3: drittes Sensorelement
- 15.4: unteres Isolationselement
- 15.5: oberes Isolationselement
- 15.6: Vorspannelement
- 16: Isolator
- 17.1: untere Elektrode
- 17.2: obere Elektrode
- 17.3: Optokoppler
- 18: Auswerteeinheit
- 19: elektrische Durchführung
- 20: Schweisszange
- 20.1: unterer Elektrodenarm
- 20.2: oberer Elektrodenarm
- 21.1: Träger
- 21.2: Lagerelement
- AKS: analoge Kraftsignale
- DKS: digitale Kraftsignale
- AMS: analoge Messsignale
- DMS: digitale Messsignale
- K: Kupplungskraft
- M: Masseschwerpunkt
- R: radiale Distanz
- TIS: technische Informationssignale
- X: Längsachse
- XY: Horizontalebene
- XZ: Längsebene
- Y: Querachse
- YZ: Querebene
- Z: Vertikalachse

## Patentansprüche

1. Vorrichtung (1) zur Messung einer Schweisskraft und zur Erfassung einer Schweissspannung während eines Schweissvorgangs einer Widerstandschweisseinrichtung (2), welche Widerstandschweisseinrichtung (2) eine Schweisszange (20) mit zwei Elektrodenarmen (20.1, 20.2) aufweist, welche zwei Elektrodenarme (20.1, 20.2) aus einem unteren Elektrodenarm (20.1) und einem oberen Elektrodenarm (20.2) bestehen; mit zwei Kontaktbuchsen (12, 13) zum Platzieren der Vorrichtung (1) an den Elektrodenarmen (20.1, 20.2), welche zwei Kontaktbuchsen (12, 13) aus einer unteren Kontaktbuchse (12) und einer oberen Kontaktbuchse (13) bestehen, welche untere Kontaktbuchse (12) eine untere konische Vertiefung (12.1) aufweist, welche untere konische Vertiefung (12.1) im an den Elektrodenarmen (20.1, 20.2) platzierten Zustand der Vorrichtung (1) eine vorderste Spitze des unteren Elektrodenarms (20.1) aufnimmt und bezüglich einer Vertikalachse (Z) zentriert; mit einem Gehäuseunterteil (10) und einem Gehäuseoberteil (11); welche untere Kontaktbuchse (12) aussenseitig am Gehäuseunterteil (10) befestigt ist und welche obere Kontaktbuchse (13) aussenseitig am Gehäuseoberteil (11) befestigt ist; mit mindestens einem Sensorelement (15.1 - 15.3) zur Messung der Schweisskraft, welche von den Elektrodenarmen (20.1, 20.2) während eines Schweissvorgangs ausgeübt wird; und mit mindestens einem Bauelement (17.1 - 17.3) zur Erfassung der Schweissspannung während des Schweissvorgangs; **dadurch gekennzeichnet, dass** die Vorrichtung (1) ein Kupplungsmittel (14) aufweist, welches Kupplungsmittel (14), im an den Elektrodenarmen (20.1, 20.2) platzierten Zustand der Vorrichtung (1), die Vorrichtung (1) mechanisch mit der Widerstandschweisseinrichtung (2) kuppelt; dass zur mechanischen Kupplung von Vorrichtung (1) und Widerstandschweisseinrichtung (2) das Kupplungsmittel (14) eine Kupplungskraft (K) auf die Widerstandschweisseinrichtung (2) ausübt; dass die Vorrichtung (1) einen Isolator (16) aufweist; dass der Isolator (16) das Gehäuseunterteil (10) elektrisch vom Gehäuseoberteil (11) isoliert; dass das Gehäuseunterteil (10) und das Gehäuseoberteil (11) über den Isolator (16) mechanisch miteinander verbunden sind; dass das Gehäuseunterteil (10) und das Gehäuseoberteil (11) im verbundenen Zustand mindestens einen Innenraum (10.1 - 10.5) umschliessen; und dass das Sensorelement (15.1 - 15.3) und das Bauelement (17.1 - 17.3) im Innenraum (10.1 - 10.5) angeordnet sind.

2. Vorrichtung (1) nach Anspruch 1, **dadurch gekennzeichnet, dass** das Kupplungsmittel (14) einen Kupplungskörper (14.1) aufweist, welcher Kupplungskörper (14.1) aussenseitig an der unteren Kontaktbuchse (12) befestigt ist; dass der Kupplungskörper (14.1) eine Kupplungsöffnung (14.5) aufweist, welche Kupplungsöffnung (14.5) sich entlang der Vertikalachse (Z) durch den Kupplungskörper (14.1) erstreckt und mit der unteren konischen Vertiefung (12.1) kommuniziert; dass im an den Elektrodenarmen (20.1, 20.2) platzierten Zustand der Vorrichtung (1) der untere Elektrodenarm (20.1) durch die Kupplungsöffnung (14.5) ragt; und dass das Kupplungsmittel (14) zur mechanischen Kupplung von Vorrichtung (1) und Widerstandschweisseinrichtung(2) die Kupplungskraft (K) in der Kupplungsöffnung (14.5) auf den unteren Elektrodenarm (20.1) ausübt.

3. Vorrichtung (1) nach Anspruch 2, **dadurch gekennzeichnet, dass** das Kupplungsmittel (14) ein Klemmelement (14.3) aufweist, welches Klemmelement (14.3) die Kupplungsöffnung (14.5) radial umschliesst; dass das Klemmelement (14.3) ein erstes Klemmelementende (14.31) und ein zweites Klemmelementende (14.32) aufweist, welches erste und zweite Klemmelementende (14.31, 14.32) durch einen Spalt (14.33) voneinander beabstandet sind; und dass eine Verkleinerung der Breite des Spalts (14.33) die Kupplungskraft (K) auf den unteren Elektrodenarm (20.1) ausübt.

4. Vorrichtung (1) nach Anspruch 3, **dadurch gekennzeichnet, dass** das Kupplungsmittel (14) ein Spannmittel (14.2) aufweist, welches Spannmittel (14.2) am Klemmelement (14.3) angeordnet ist; dass das Spannmittel (14.2) ein Hülsenelement (14.21) und ein Schraubelement (14.22) aufweist; dass das Hülsenelement (14.21) am ersten Klemmelementende (14.31) befestigt ist und das Schraubelement (14.22) hält; und dass das Schraubelement (14.22) in das zweite Klemmelementende (14.32) schraubbar ist und durch das Einschrauben die Breite des Spalts (14.33) verkleinert.

5. Vorrichtung (1) nach Anspruch 2, **dadurch gekennzeichnet, dass** in der Kupplungsöffnung (14.5) ein Halteelement (14.51) angeordnet ist; dass im an den Elektrodenarmen (20.1, 20.2) platzierten Zustand der Vorrichtung (1) der untere Elektrodenarm (20.1) durch die Kupplungsöffnung (14.5) ragt und das Halteelement (14.51) staucht; und dass das gestauchte Halteelement (14.51) die Kupplungskraft (K) auf den unteren Elektrodenarm (20.1) ausübt.

6. Vorrichtung (1) nach Anspruch 1, **dadurch gekennzeichnet, dass** das die Widerstandschweisseinrichtung (2) einen Träger (21.1) aufweist; dass die Vorrichtung (1) im an den Elektrodenarmen (20.1, 20.2) platzierten Zustand mechanisch mit dem Träger (21.1) kuppelbar ist; dass das Kupplungsmittel (14) aus einem weiteren Befestigungsmittel (14.4) besteht; und dass das weitere Befestigungsmittel (14.4) zur mechanischen Kupplung von Vorrichtung (1) und Widerstandschweisseinrichtung (2) die Kupplungskraft (K) auf den Träger (21.1) ausübt.

7. Vorrichtung (1) nach einem der Ansprüche 1 bis 7, **dadurch gekennzeichnet, dass** das Sensorelement (15.1 - 15.3) im Innenraum (10.1 - 10.5) im Krafthauptschluss der Schweisskraft angeordnet ist.

8. Vorrichtung (1) nach einem der Ansprüche 1 bis 7, **dadurch gekennzeichnet, dass** die Vorrichtung (1) ein erstes Sensorelement (15.1), ein zweites Sensorelement (15.2) und ein drittes Sensorelement (15.3) aufweist; dass die drei Sensorelemente (15.1 - 15.3) identische Einkomponenten-Kraftaufnehmer sind, welche die gleiche entlang der Längsachse (X) wirkende Schweisskraft messen; und dass die drei Sensorelemente (15.1 - 15.3) für die gemessene Schweisskraft Kraftwerte erzeugen.

9. Vorrichtung (1) nach Anspruch 8, **dadurch gekennzeichnet, dass** das erste Sensorelement (15.1) in einem ersten Innenraum (10.1) angeordnet ist, das zweite Sensorelement (15.2) in einem zweiten Innenraum (10.2) angeordnet ist und das dritte Sensorelement (15.3) in einem dritten Innenraum (10.3) angeordnet; dass die drei Sensorelemente (15.1 - 15.3) in einer Horizontalebene (XY) senkrecht zu einer Vertikalachse (Z) liegen; dass die drei Sensorelemente (15.1 - 15.3) in einer gleichen radialen Distanz (R) zur Vertikalachse Z angeordnet sind; und dass die drei Sensorelemente (15.1 - 15.3) in einem Winkel von 120° gleichmässig beabstandet zueinander angeordnet sind.

10. Vorrichtung (1) nach einem der Ansprüche 8 oder 9, **dadurch gekennzeichnet, dass** das Bauelement (17.1 - 17.3) in einem vierten Innenraum (10.4) angeordnet ist; dass das Bauelement (17.1 - 17.3) eine untere Elektrode (17.1), eine obere Elektrode 17.2 und einen Optokoppler (17.3) umfasst; dass die untere Elektrode (17.1) innenseitig am Gehäuseunterteil (10) befestigt ist; dass die obere Elektrode (17.2) innenseitig am Gehäuseoberteil (11) befestigt ist; und dass der Optokoppler (17.3) eine zwischen der unteren Elektrode (17.1) und der oberen Elektrode (17.2) anliegende elektrische Schweissspannung erfasst und in Messwerte wandelt.

11. Vorrichtung (1) nach Anspruch 10, **dadurch gekennzeichnet, dass** die Vorrichtung (1) eine Auswerteeinheit (18) zur Auswertung der Kraftwerte aufweist; dass die Auswerteeinheit (18) in einem fünften Innenraum (10.5) angeordnet ist; dass die drei Innenräume (10.1 - 10.3) der drei Sensorelemente (15.1 - 15.3) und der Innenraum (10.4) des Bauelements (17.1 - 17.3) mit dem fünften Innenraum (10.5) der Auswerteeinheit (18) über Gänge (10.6) im Gehäuseunterteil (10) kommunizieren; dass die drei Sensorelemente (15.1 - 15.3) elektrische Leitungen aufweisen und die Kraftwerte über die elektrischen Leitungen zur Auswerteeinheit (18) ableiten; dass der Optokoppler (17.3) mindestens eine elektrische Leitung aufweist und die Messwerte über die elektrische Leitung zur Auswerteeinheit (18) ableitet; und dass die elektrischen Leitungen der drei Sensorelemente (15.1 - 15.3) und die elektrische Leitung des Optokopplers (17.3) in den Gängen (10.6) verlegt sind.

12. Vorrichtung (1) nach einem der Ansprüche 10 oder 11, **dadurch gekennzeichnet, dass** die Vorrichtung (1) eine Auswerteeinheit (18) zur Auswertung der gemessenen Schweisskraft aufweist; dass das Sensorelement (15.1 - 15.3) piezoelektrisches Material aufweist, welches unter der Wirkung der Schweisskraft elektrische Polarisationsladungen erzeugt; dass das Sensorelement (15.1 - 15.3) die elektrischen Polarisationsladungen an die Auswerteeinheit (18) ableitet; dass die Auswerteeinheit (18) einen Ladungsverstärker aufweist, welcher die elektrischen Polarisationsladungen in elektrische Gleichspannungen verstärkt; und dass die Auswerteeinheit (18) über Kalibrierdaten des Sensorelements (15.1 - 15.3) verfügt, mit welchen Kalibrierdaten die Auswerteeinheit (18) die elektrischen Gleichspannungen linearisiert.

13. Vorrichtung (1) nach Anspruch 12, **dadurch gekennzeichnet, dass** die Auswerteeinheit (18) die linearisierten elektrischen Gleichspannungen als analoge Kraftsignale (AKS) und als digitale Kraftsignale (DKS) bereitstellt; dass die Auswerteeinheit (18) die Messwerte als analoge Messsignale (AMS) oder digitale Messsignale (DMS) bereitstellt; dass die Vorrichtung (1) eine elektrische Durchführung (19) aufweist; dass die Auswerteeinheit (18) die analogen Kraftsignale (AKS) und die digitalen Kraftsignale (DKS) an die elektrische Durchführung (19) ableitet; dass die Auswerteeinheit (18) die analogen Messsignale (AMS) und die digitalen Messsignale (DMS) an die elektrische Durchführung (19) ableitet; und dass an der elektrischen Durchführung (19) von einer Umgebung ausserhalb der Vorrichtung (1) aus, wahlweise analoge Kraftsignale (AKS) und digitale Kraftsignale (DKS) sowie analoge Messsignale (AMS) und digitale Messsignale (DMS) abgreifbar sind.

## Claims

1. A device (1) for measuring a welding force and for detecting a welding voltage during a welding process of a resistance welding device (2), which resistance welding device (2) comprises a welding gun (20) with two electrode arms (20. 1, 20.2), which two electrode arms (20.1, 20.2) consist of a lower electrode arm (20.1) and an upper electrode arm (20.2); comprising two contact sockets (12, 13) for placing the device (1) at the electrode arms (20.1, 20.2), which two contact sockets (12, 13) consist of a lower contact socket (12) and an upper contact socket (13), which lower contact socket (12) has a lower conical recess (12.1), wherein, when the device (1) is placed at the electrode arms (20.1, 20.2), said lower conical recess (12.1) accommodates a foremost tip of the lower electrode arm (20.1) and centers it with respect to a vertical axis (Z); comprising at least one sensor element (15.1 - 15.3) for measuring the welding force applied by the electrode arms (20.1, 20.2) during a welding process; and comprising at least one component (17.1 - 17.3) for detecting the welding voltage during the welding process; **characterized in that** the device (1) comprises a coupling means (14), wherein, when the device (1) is placed at the electrode arms (20.1, 20.2), said coupling means (14) mechanically couples the device (1) to the resistance welding device (2); **in that**, for mechanical coupling of the device (1) and the resistance welding device (2), the coupling means (14) exerts a coupling force (K) onto the resistance welding device (2); **in that** the device (1) comprises a lower housing part (10), an upper housing part (11) and an insulator (16); **in that** the lower contact socket (12) is fastened on the outside of the lower housing part (10); **in that** the upper contact socket (13) is fastened on the outside of the upper housing part (11); **in that** the insulator (16) electrically insulates the lower housing part (10) from the upper housing part (11); **in that** the lower housing part (10) and the upper housing part (11) are mechanically connected to each other by the insulator (16); **in that** the lower housing part (10) and the upper housing part (11), when connected, enclose at least one interior space (10.1 - 10.5); and **in that** the sensor element (15.1 - 15.3) and the component (17.1 - 17.3) are arranged in said interior space (10.1 - 10.5).

2. The device (1) according to claim 1, **characterized in that** the coupling means (14) comprises a coupling body (14.1), which coupling body (14.1) is attached to the lower contact socket (12) on the outside thereof; **in that** the coupling body (14.1) comprises a coupling opening (14.5), which coupling opening (14.5) extends through the coupling body (14.1) along the vertical axis (Z) and communicates with the lower conical recess (12.1); **in that**, when the device (1) is placed at the electrode arms (20.1, 20.2), the lower electrode arm (20.1) projects through the coupling opening (14.5); and **in that**, for mechanical coupling of the device (1) and the resistance welding device (2), the coupling means (14) exerts the coupling force (K) in the coupling opening (14.5) onto the lower electrode arm (20.1).

3. The device (1) according to claim 2, **characterized in that** the coupling means (14) comprises a clamping member (14.3), which clamping member (14.3) surrounds the coupling opening (14.5) in a radial direction; **in that** the clamping member (14.3) has a first clamping member end (14. 31) and a second clamping member end (14.32), which first and second clamping member ends (14.31, 14.32) are spaced apart from each other by a gap (14.33); and **in that** a reduction in the width of the gap (14.33) exerts the coupling force (K) onto the lower electrode arm (20.1).

4. The device (1) according to claim 3, **characterized in that** the coupling means (14) comprises a clamping means (14.2), which clamping means (14.2) is arranged at the clamping member (14.3); **in that** the clamping means (14.2) comprises a bushing member (14.21) and a screw member (14.22); **in that** the bushing member (14.21) is fastened to the first clamping member end (14.31) and holds the screw member (14.22); and **in that** the screw member (14.22) can be screwed into the second clamping member end (14.32) and, by being screwed in, in reduces the width of the gap (14.33).

5. The device (1) according to claim 2, **characterized in that** a retaining member (14.51) is arranged in the coupling opening (14.5); **in that**, when the device (1) is placed at the electrode arms (20.1, 20.2), the lower electrode arm (20.1) protrudes through the coupling opening (14.5) and compresses the retaining member (14.51); and **in that** the compressed retaining member (14.51) exerts the coupling force (K) onto the lower electrode arm (20.1).

6. The device (1) according to claim 1, **characterized in that** the resistance welding device (2) comprises a support (21.1); **in that** the device (1), when placed at the electrode arms (20.1, 20.2), can be mechanically coupled to the support (21.1); **in that** the coupling means (14) consists of a further fastening means (14.4); and **in that** the further fastening means (14.4) exerts the coupling force (K) onto the support (21.1) for the mechanical coupling of the device (1) and the resistance welding device (2).

7. The device (1) according to any of the claims 1 to 7, **characterized in that** the sensor element (15.1 - 15.3) is arranged in the interior space (10.1 - 10.5) in the main force path of the welding force.

8. The device (1) according to any of the claims 1 to 7, **characterized in that** the device (1) comprises a first sensor element (15.1), a second sensor element (15.2) and a third sensor element (15.3); **in that** the three sensor elements (15.1 - 15.3) are identical single-component force transducers which measure the same welding force acting along the longitudinal axis (X); and **in that** the three sensor elements (15.1 - 15.3) generate force values for the welding force measured.

9. The device (1) according to claim 8, **characterized in that** the first sensor element (15.1) is arranged in a first interior space (10.1), the second sensor element (15.2) is arranged in a second interior space (10.2) and the third sensor element (15.3) is arranged in a third interior space (10.3); **in that** the three sensor elements (15.1 - 15.3) lie in a horizontal plane (XY) perpendicular to a vertical axis (Z); **in that** the three sensor elements (15.1 - 15.3) are arranged at an equal radial distance (R) from the vertical axis Z; and **in that** the three sensor elements (15.1 - 15.3) are arranged evenly spaced apart from each other at an angle of 120°.

10. The device (1) according to any of the claims 8 or 9, **characterized in that** the component (17.1 - 17.3) is arranged in a fourth interior space (10.4); **in that** the component (17.1 - 17.3) comprises a lower electrode (17.1), an upper electrode 17.2 and an optocoupler (17.3); **in that** the lower electrode (17.1) is fastened to the lower housing part (10) on the inside thereof; **in that** the upper electrode (17.2) is fastened to the upper housing part (11) on the inside thereof; and **in that** the optocoupler (17.3) detects an electrical welding voltage acting between the lower electrode (17.1) and the upper electrode (17.2) and converts it into measured values.

11. The device (1) according to claim 10, **characterized in that** the device (1) comprises an evaluation unit (18) for evaluating the force values; **in that** the evaluation unit (18) is arranged in a fifth interior space (10.5); **in that** the three interior spaces (10.1 - 10.3) of the three sensor elements (15.1 - 15.3) and the interior space (10.4) of the component (17.1 - 17.3) communicate with the fifth interior space (10.5) of the evaluation unit (18) by passages (10.6) in the lower housing part (10); **in that** the three sensor elements (15.1 - 15.3) have electrical wires and transmit the force values to the evaluation unit (18) by the electrical wires; **in that** the optocoupler (17.3) has at least one electrical wire and transmits the measured values to the evaluation unit (18) by the electrical wire; and **in that** the electrical wires of the three sensor elements (15.1 - 15.3) and the electrical wire of the optocoupler (17.3) are guided in the passages (10.6).

12. The device (1) according to any of the claims 10 or 11, **characterized in that** the device (1) comprises an evaluation unit (18) for evaluating the welding force measured; **in that** the sensor element (15.1 - 15.3) comprises piezoelectric material that generates electrical polarization charges under the action of the welding force; **in that** the sensor element (15.1 - 15.3) transmits the electrical polarization charges to the evaluation unit (18); **in that** the evaluation unit (18) comprises a charge amplifier that amplifies the electrical polarization charges to give direct electrical voltages; and **in that** the evaluation unit (18) has calibration data of the sensor element (15.1 - 15.3) wherein the evaluation unit (18) uses said calibration data for linearizing the direct electrical voltages.

13. The device (1) according to claim 12, **characterized in that** the evaluation unit (18) provides the linearized electrical DC voltages as analog force signals (AKS) and as digital force signals (DKS); **in that** the evaluation unit (18) provides the measured values as analog measurement signals (AMS) or digital measurement signals (DMS); **in that** the device (1) comprises an electrical feedthrough (19); **in that** the evaluation unit (18) transmits the analog force signals (AKS) and the digital force signals (DKS) to the electrical feedthrough (19); **in that** the evaluation unit (18) transmits the analog measurement signals (AMS) and the digital measurement signals (DMS) to the electrical feedthrough (19); and **in that** analog force signals (AKS) and digital force signals (DKS) as well as analog measurement signals (AMS) and digital measurement signals (DMS) can be picked off from an environment outside of the device (1) at said electrical feedthrough (19).

## Revendications

1. Dispositif (1) pour mesurer une force de soudage et pour détecter une tension de soudage pendant un processus de soudage d'un dispositif de soudage par résistance (2), lequel dispositif de soudage par résistance (2) comprend une pince de soudage (20) ayant deux bras d'électrode (20.1, 20.2) ; lesdits deux bras d'électrode (20.1, 20.2) consistant en un bras d'électrode inférieur (20.1) et un bras d'électrode supérieur (20.2) ; comprenant deux douilles de contact (12, 13) pour placer le dispositif (1) sur les bras d'électrode (20.1, 20.2) ; lesdites deux douilles de contact (12, 13) consistant en une douille de contact inférieure (12) et une douille de contact supérieure (13) ; laquelle douille de contact inférieure (12) comporte un renfoncement conique inférieur (12.1), dans lequel, lorsque le dispositif (1) est placé sur les bras d'électrode (20.1, 20.2), ledit renfoncement conique inférieur (12.1) loge la pointe la plus avancée du bras d'électrode inférieur (20.1) et le centre par rapport à un axe vertical (Z) ; comprenant une partie de boîtier inférieure (10) et une partie de boîtier supérieure (11) ; ladite douille de contact inférieure (12) étant fixée à l'extérieur de la partie de boîtier inférieure (10) et ladite douille de contact supérieure (13) étant fixée à l'extérieur de la partie de boîtier supérieure (11) ; comprenant au moins un élément de capteur (15.1 - 15.3) pour mesurer la force de soudage exercée par les bras d'électrode (20.1, 20.2) au cours d'un processus de soudage ; et comprenant au moins un composant (17.1 - 17.3) pour détecter la tension de soudage pendant ledit processus de soudage ; **caractérisé en ce que** ledit dispositif (1) comprend un moyen de couplage (14), dans lequel, lorsque le dispositif (1) est placé sur les bras d'électrode (20.1, 20.2), ledit moyen de couplage (14) couple mécaniquement le dispositif (1) au dispositif de soudage par résistance (2) ; **en ce que**, pour accomplir ledit couplage mécanique du dispositif (1) et du dispositif de soudage par résistance (2), le moyen de couplage (14) exerce une force de couplage (K) sur le dispositif de soudage par résistance (2) ; **en ce que** le dispositif (1) comprend un isolateur (16) ; lequel isolateur isole électriquement la partie inférieure du boîtier (10) de la partie supérieure du boîtier (11) ; dans lequel lesdites parties inférieure (10) et supérieure du boîtier (11) sont mécaniquement reliées l'une à l'autre par l'intermédiaire dudit isolateur (16) ; dans lequel, lorsqu'elles sont reliées l'une à l'autre, lesdites parties inférieure (10) et supérieure du boîtier (11) renferment au moins un espace intérieur (10.1 - 10.5) ; et dans lequel ledit élément de capteur (15.1 - 15.3) et ledit composant (17.1 - 17.3) sont disposés dans l'espace intérieur (10.1 - 10.5).

2. Dispositif (1) selon la revendication 1, **caractérisé en ce que** le moyen de couplage (14) comprend un corps de couplage (14.1), lequel corps de couplage (14.1) est fixé à l'extérieur de la douille de contact inférieure (12) ; **en ce que** le corps de couplage (14.1) comprend une ouverture de couplage (14.5), laquelle ouverture de couplage (14.5) s'étend le long de l'axe vertical (Z) à travers le corps de couplage (14.1) et communique avec le renfoncement conique inférieur (12.1) ; en ce sens que, lorsque le dispositif (1) est placé sur les bras d'électrode (20.1, 20.2), le bras d'électrode inférieur (20.1) fait saillie à travers l'ouverture de couplage (14.5) ; et **en ce que**, pour accomplir le couplage mécanique du dispositif (1) et du dispositif de soudage par résistance (2), le moyen de couplage (14) exerce la force de couplage (K) sur le bras d'électrode inférieur (20.1) dans l'ouverture de couplage (14.5).

3. Dispositif (1) selon la revendication 2, **caractérisé en ce que** le moyen de couplage (14) comprend un élément d'accrochage (14.3), lequel élément d'accrochage (14.3) entoure l'ouverture de couplage (14.5) dans une direction radiale ; **en ce que** l'élément d'accrochage (14.3) comporte une première extrémité d'élément d'accrochage (14.31) et une seconde extrémité d'élément d'accrochage (14.32), lesdites première et seconde extrémités d'élément d'accrochage (14.31, 14.32) étant séparées l'une de l'autre par une fente (14.33) ; et **en ce que** la force de couplage (K) est exercée sur le bras inférieur de l'électrode (20.1) par une réduction de la largeur de la fente (14.33).

4. Dispositif (1) selon la revendication 3, **caractérisé en ce que** le moyen de couplage (14) comprend un moyen de serrage (14.2), lequel moyen de serrage (14.2) est disposé sur l'élément d'accrochage (14.3) ; **en ce que** le moyen de serrage (14.2) comprend un élément de cosse (14.21) et un élément de vis (14.22) ; **en ce que** la cosse (14.21) est fixée à la première extrémité de l'élément d'accrochage (14.31) et retient la vis (14.22) ; et **en ce que** la vis (14.22) peut être vissée dans la seconde extrémité de l'élément d'accrochage (14.32) et, par ledit vissage, réduit la largeur de la fente (14.33).

5. Dispositif (1) selon la revendication 2, **caractérisé en ce qu'**un élément de maintien (14.51) est disposé dans l'ouverture de couplage (14.5) ; **en ce que**, lorsque le dispositif (1) est placé sur les bras d'électrode (20.1, 20.2), le bras d'électrode inférieur (20.1) fait saillie à travers l'ouverture de couplage (14.5) et comprime l'élément de maintien (14.51) ; et **en ce que** l'élément de maintien comprimé (14.51) exerce la force de couplage (K) sur le bras d'électrode inférieur (20.1).

6. Dispositif (1) selon la revendication 1, **caractérisé en ce que** le dispositif de soudage par résistance (2) comprend un support (21.1) ; **en ce que** le dispositif (1), lorsqu'il est placé sur les bras d'électrode (20.1, 20.2), peut être couplé mécaniquement au support (21. 1) ; **en ce que** le moyen de couplage (14) consiste en un autre moyen de fixation (14.4) ; et **en ce que**, pour le couplage mécanique du dispositif (1) et du dispositif de soudage par résistance (2), l'autre moyen de fixation (14.4) exerce la force de couplage (K) sur le support (21.1).

7. Dispositif (1) selon l'une quelconque des revendications 1 à 7, **caractérisé en ce que** l'élément de capteur (15.1 - 15.3) est disposé dans l'espace intérieur (10.1 - 10.5) dans la direction principale de la force de soudage.

8. Dispositif (1) selon l'une quelconque des revendications 1 à 7, **caractérisé en ce que** le dispositif (1) comprend un premier élément de capteur (15.1), un second élément de capteur (15.2) et un troisième élément de capteur (15.3) ; **en ce que** les trois éléments de capteur (15.1 - 15.3) sont des capteurs de force mono-composants identiques qui mesurent la même force de soudage agissant le long de l'axe longitudinal (X) ; et **en ce que** les trois éléments de capteur (15.1 - 15.3) génèrent des valeurs de force pour la force de soudage mesurée.

9. Dispositif (1) selon la revendication 8, **caractérisé en ce que** le premier élément de capteur (15.1) est disposé dans un premier espace intérieur (10.1), le second élément de capteur (15.2) est disposé dans un second espace intérieur (10.2) et le troisième élément de capteur (15.3) est disposé dans un troisième espace intérieur (10.3) ; **en ce que** les trois éléments de capteur (15.1 - 15.3) se trouvent dans un plan horizontal (XY) perpendiculaire à un axe vertical (Z) ; **en ce que** les trois éléments de capteur (15.1 - 15.3) sont disposés à une distance radiale égale (R) par rapport à l'axe vertical Z ; et **en ce que** les trois éléments de capteur (15.1 - 15.3) sont régulièrement espacés les uns des autres d'un angle de 120°.

10. Dispositif (1) selon l'une quelconque des revendications 8 ou 9, **caractérisé en ce que** le composant (17.1 - 17.3) est disposé dans un quatrième espace intérieur (10.4) ; **en ce que** le composant (17.1 - 17.3) comprend une électrode inférieure (17.1), une électrode supérieure 17.2 et un optocoupleur (17.3) ; **en ce que** l'électrode inférieure (17.1) est fixée à l'intérieur de la partie inférieure du boîtier (10) ; **en ce que** l'électrode supérieure (17.2) est fixée à l'intérieur de la partie supérieure du boîtier (11) ; et **en ce que** l'optocoupleur (17.3) détecte une tension électrique de soudage agissant entre l'électrode inférieure (17.1) et l'électrode supérieure (17.2) et la convertit en valeurs mesurées.

11. Dispositif (1) selon la revendication 10, **caractérisé en ce que** le dispositif (1) comprend une unité d'évaluation (18) pour évaluer les valeurs de force ; **en ce que** l'unité d'évaluation (18) est disposée dans un cinquième espace intérieur (10.5) ; **en ce que** les trois espaces intérieurs (10.1 - 10.3) des trois éléments de capteur (15.1 - 15.3) et l'espace intérieur (10.4) du composant (17.1 - 17.3) communiquent avec le cinquième espace intérieur (10.5) de l'unité d'évaluation (18) par des passages (10.6) dans la partie inférieure du boîtier (10) ; **en ce que** les trois éléments de capteur (15.1 - 15.3) comportent des lignes électriques et transmettent les valeurs de force à l'unité d'évaluation (18) par les lignes électriques ; **en ce que** l'optocoupleur (17. 3) comporte au moins une ligne électrique et transmet les valeurs mesurées à l'unité d'évaluation (18) par la ligne électrique ; et **en ce que** les lignes électriques des trois éléments de capteur (15.1 - 15.3) et la ligne électrique de l'optocoupleur (17.3) sont guidées dans les passages (10.6).

12. Dispositif (1) selon l'une quelconque des revendications 10 ou 11, **caractérisé en ce que** le dispositif (1) comprend une unité d'évaluation (18) pour évaluer la force de soudage mesurée ; **en ce que** l'élément de capteur (15.1 - 15.3) comprend un matériau piézoélectrique qui génère des charges de polarisation électriques sous l'action de la force de soudage ; **en ce que** l'élément de capteur (15.1 - 15.3) transmet les charges de polarisation électriques à l'unité d'évaluation (18) ; laquelle unité d'évaluation (18) comprend un amplificateur de charge qui amplifie les charges de polarisation électriques pour produire des tensions électriques continues ; et **en ce que** l'unité d'évaluation (18) a des données d'étalonnage de l'élément de capteur (15.1 - 15.3) et **en ce que** l'unité d'évaluation (18) utilise ces données d'étalonnage pour linéariser ces tensions électriques continues.

13. Dispositif (1) selon la revendication 12, **caractérisé en ce que** l'unité d'évaluation (18) fournit les tensions électriques continues linéarisées comme signaux de force analogiques (AKS) et signaux de force numériques (DKS) ; **en ce que** l'unité d'évaluation (18) fournit les valeurs mesurées comme signaux de mesure analogiques (AMS) ou signaux de mesure numériques (DMS) ; **en ce que** le dispositif (1) comprend une traversée électrique (19) ; **en ce que** l'unité d'évaluation (18) transmet les signaux de force analogiques (AKS) et les signaux de force numériques (DKS) à la traversée électrique (19) ; **en ce que** l'unité d'évaluation (18) transmet les signaux de mesure analogiques (AMS) et les signaux de mesure numériques (DMS) à la traversée électrique (19) ; et **en ce que** des signaux de force analogiques (AKS) et des signaux de force numériques (DKS) ainsi que des signaux de mesure analogiques (AMS) et des signaux de mesure numériques (DMS) peuvent être optionellement prélevés sur ladite traversée électrique (19) à partir d'un environnement extérieur du dispositif (1).
